# EUROPEAN PATENT APPLICATION

(11) **EP 4 752 361 A1**
(43) Date of publication of application: **03.06.2026**
(21) Application number: 25834107.2
(22) Date of filing: 31.07.2025
(51) Int. Cl.: F04B 17/04

(54) **INDUCTION COIL STRUCTURE, ELECTROMAGNETIC PUMP, ELECTROMAGNETIC VALVE AND ELECTROMAGNETIC FLUID PUMP**

(30) Priority: 02.08.2024 CN 202411058494
(71) Applicant: Shenzhen CNHT Co., Ltd, Shenzhen, Guangdong 518000 (CN)
(72) Inventor: XIONG, Yingshen, Shenzhen, Guangdong 518000 (CN); LU, Huanlu, Shenzhen, Guangdong 518000 (CN); WEN, Kaifeng, Shenzhen, Guangdong 518000 (CN); LEI, Liqiang, Shenzhen, Guangdong 518000 (CN); LI, Pinghua, Shenzhen, Guangdong 518000 (CN); HUANG, Zhiyong, Shenzhen, Guangdong 518000 (CN)
(74) Representative: Chung, Hoi Kan
(86) International application number: PCT/CN2025/111764
(87) International publication number: WO 2026/026902

(57) **Abstract**

Disclosed in this disclosure are an induction coil structure, an electromagnetic pump, an electromagnetic valve, and an electromagnetic fluid pump. The induction coil structure mentions that a winding coil is mounted on a bobbin, the winding coil can generate a magnetic field when powered on, and the winding coil is formed by winding a wire with an insulation layer. The quantity of windings of the wire with the insulation layer of the winding coil at two ends of the bobbin is greater than the quantity of windings of the wire with the insulation layer in the middle, so that the wire with the insulation layer is retained at two ends with high magnetic field intensity on the induction coil structure, the wire with the insulation layer of the winding coil in the middle of the bobbin is reduced, and high magnetic field intensity of magnetic poles at two ends of the magnetic field is adapted, thereby reducing the usage of the wire with the insulation layer in the middle of the winding coil, and enabling the overall induction coil structure to be lightweight and have low power consumption. The electromagnetic pump includes the induction coil structure and a pump assembly. The induction coil structure is disposed outside the pump assembly, and the electromagnetic pump is lightweight and has low power consumption.

## Description

### TECHNICAL FIELD

This disclosure relates to the technical field of electromagnetic pumps, and in particular, to an induction coil structure, an electromagnetic pump, an electromagnetic valve, and an electromagnetic fluid pump.

### BACKGROUND

An electromagnetic pump is a pump-type device that utilizes a powered-on fluid in a magnetic field to implement liquid transportation and flow under the action of electromagnetic force. Specifically, by utilizing the interaction between a magnetic field and a current in a conductive fluid, the fluid is subjected to the electromagnetic force to generate a pressure gradient, thereby pushing the fluid to move.

An electromagnetic pump is usually composed of an electromagnetic coil, an iron core, a valve, and a pump body. When the electromagnetic coil is powered on, a magnetic field is generated, which exerts an attractive force or a repulsive force on the iron core, thereby opening or closing the valve. At this time, a space with changed volume is formed in the pump body, and the liquid enters and exits this space by opening or closing the valve. When the valve is opened, the liquid is drawn in; and when the valve is closed, the liquid is expelled.

The electromagnetic coil in the existing electromagnetic pump generates a magnetic field when powered on. The intensity of the magnetic field of the electromagnetic coil is concentrated at the two poles, which is higher than that in the middle of the electromagnetic coil. Excessive wires with insulation layers disposed in the middle of the coil lead to waste, resulting in high cost, low efficiency, and high temperature rise of the electromagnetic pump.

### SUMMARY

The technical problem to be solved by this disclosure is that excessive wires with insulation layers disposed in the middle of the coil in the existing electromagnetic pump lead to waste, resulting in high cost, low efficiency, and high temperature rise of the electromagnetic pump.

To solve the above problem, to solve the above technical problem, or at least partially solve the above technical problem, this disclosure provides an induction coil structure, an electromagnetic pump, an electromagnetic valve, and an electromagnetic fluid pump.

According to a first aspect, this disclosure discloses an induction coil structure, including one winding coil and a bobbin, where the winding coil is disposed on an outer wall of the bobbin; and
the winding coil is formed by winding a wire with an insulation layer, and a quantity of windings of the wire with the insulation layer at two ends of the bobbin is greater than a quantity of windings of the wire with the insulation layer in the middle.

Preferably, one wire with the insulation layer is disposed in the middle of the winding coil.

According to a second aspect, this disclosure discloses an induction coil structure, including at least two winding coils and a bobbin, where the winding coils are disposed on an outer wall of the bobbin in a segmented manner; and
the winding coils are formed by winding wires with insulation layers, the winding coils are connected in parallel, and winding density of the winding coils at two ends of the bobbin is greater than winding density of the winding coils in the middle of the bobbin.

Preferably, the winding coils are disposed on the bobbin at equal or unequal intervals.

Preferably, directions of currents introduced into any two of the winding coils are the same or opposite.

Preferably, current values introduced into the winding coils disposed at the two ends of the bobbin are less than current values introduced into the winding coils in the middle of the bobbin.

Preferably, a power supply is input into the induction coil structure initially, and a power supply of a preset first current value is applied to the winding coils in the middle of the bobbin; and
after the power supply of the first current value is applied for a third preset time period, a power supply of a preset second current value is applied to the winding coils in the middle of the bobbin, and the first current value is greater than the second current value.

Preferably, at least one magnetic yoke ring and a retaining frame are included, the bobbin is connected to the retaining frame, and the retaining frame is disposed on a periphery of the winding coil;
the winding coil, the magnetic yoke ring, and the retaining frame form a closed-loop magnetic field; and
at least one mounting position is disposed in the bobbin, the magnetic yoke ring is disposed on the mounting position, a quantity of the disposed mounting positions is matched with a quantity of the disposed magnetic yoke rings, and one magnetic yoke ring is disposed on one mounting position.

Preferably, at least one magnetization member is included, and the magnetization member is disposed in the middle of the winding coil or between two adjacent winding coils;
preferably, the magnetization member is disposed annularly, and the magnetization member is sleeved on the bobbin;
preferably, the bobbin is provided with at least one placement block, and the placement block is sleeved on an outer side of the bobbin;
preferably, the placement block is detachably connected to the bobbin;
preferably, the magnetization member is provided with a clamping position, the placement block is provided with an arc-shaped groove, and the magnetization member is mounted in the arc-shaped groove; and
preferably, the magnetization member is disposed in a split manner, the magnetization member includes at least two magnetic members, and all the magnetic members form one annulus.

Preferably, the magnetization member is made of a magnetically conductive material or a non-magnetically inductive material;
preferably, an air gap is formed between the magnetization member and the retaining frame;
preferably, an edge of the magnetization member is in contact with an inner wall of the retaining frame; and
preferably, an encapsulation layer is included, and the encapsulation layer is covered on an outer surface of the winding coil.

Preferably, a first contact piece and a second contact piece are included, and the first contact piece and the second contact piece are mounted on the retaining frame; and
any one winding coil includes two wiring terminals, and the first contact piece and the second contact piece are connected to one wiring terminal respectively.

Preferably, a diode is included, one end of the diode is connected to any one winding coil, and the other end of the diode is connected to the first contact piece or the second contact piece.

Preferably, the winding coil is connected to an alternating current or a direct current.

Preferably, the bobbin is made of an insulation material.

According to a third aspect, this disclosure provides an electromagnetic pump, including the above induction coil mechanism.

Preferably, a pump assembly is included, and the pump assembly is disposed in a bobbin;
the pump assembly includes a pipe body, a moving assembly, a reset assembly, a sealing assembly, a valve core, and a water outlet pipe;
the moving assembly, the reset assembly, and the valve core are movably disposed in the pipe body, the reset assembly is in contact with the moving assembly, and the moving assembly is detachably connected to the valve core;
the water outlet pipe is disposed on one side of the pipe body; and the sealing assembly is disposed between the pipe body and the water outlet pipe;
the sealing assembly includes a sealing rubber head, and the sealing rubber head is disposed at a tail end of the valve core; and
the moving assembly, the sealing assembly, the valve core, and the water outlet pipe form a cavity in the pipe body.

Preferably, the induction coil mechanism is powered on, the moving assembly is driven by a magnetic force of the induction coil mechanism and squeezes the reset assembly in the pipe body, and pressure intensity in the cavity is reduced, to open the valve core; and
the induction coil mechanism is powered off, the reset assembly is reset, and the pressure intensity in the cavity is increased, to push open the sealing rubber head and reciprocate to pump water.

According to a fourth aspect, this disclosure provides an electromagnetic valve, including the above induction coil structure.

According to a fifth aspect, this disclosure provides an electromagnetic fluid pump, including the above induction coil structure.

Compared with the prior art, the above technical solutions provided in this disclosure have the following advantages:
Disclosed in this disclosure are an induction coil structure, an electromagnetic pump, an electromagnetic valve, and an electromagnetic fluid pump. The induction coil structure mentions that a winding coil is mounted on a bobbin, the winding coil can generate a magnetic field when powered on, and the winding coil is formed by winding a wire with an insulation layer. The quantity of windings of the wire with the insulation layer of the winding coil at two ends of the bobbin is greater than the quantity of windings of the wire with the insulation layer in the middle, so that the wire with the insulation layer is retained at two ends with high magnetic field intensity on the induction coil structure, the wire with the insulation layer of the winding coil in the middle of the bobbin is reduced, and high magnetic field intensity of magnetic poles at two ends of the magnetic field is adapted, thereby reducing the usage of the wire with the insulation layer in the middle of the winding coil. Therefore, the induction coil structure achieves a lightweight structure and achieves the purpose of low power consumption.

In addition, the induction coil structure includes at least two winding coils that are disposed internally. The winding coils are disposed in a segmented manner, and the winding density of the winding coils disposed in the middle of the bobbin is generally less than the winding density of the winding coils disposed at the two ends of the bobbin, so that the quantity of the disposed wires with the insulation layers on the winding coils in the middle may be reduced, and the usage of the wires with the insulation layers in the middle of the winding coils may be reduced. Therefore, the induction coil structure achieves weight loss and requires smaller power on the premise of generating the same electromagnetic force.

Further, power supplies of different current values may be input into various winding coils respectively, so that the induction coil structure may apply different electromagnetic forces to corresponding segments, thereby coping with situations requiring corresponding magnitudes of electromagnetic forces. Therefore, the corresponding electromagnetic forces may be better applied, to perform fine driving control.

Further, the induction coil structure is provided with a magnetization member, and the magnetization member may divide the wire with the insulation layer on the coils into two parts. When the wire with the insulation layer is powered on, the magnetization member blocks instantaneous currents of the two parts simultaneously, and induced currents conducted to the magnetization member are canceled each other out. Magnetic fields around the magnetization member are all enhanced, and a magnetic force subjected by an iron core during powering on will be enhanced. The thermal conductivity of the magnetization member is strong, which may rapidly conduct the internal heat of the coils to the outside.

Further, a magnetic yoke ring and a retaining frame are disposed on the induction coil structure, so that magnetic conduction may be performed from the inside and outside of the bobbin, a direction of the magnetic field generated by powering on the winding coil may be along the magnetic yoke ring and the retaining frame, magnetic field intensity may be increased, and magnetic field lines can be guided and concentrated. Magnetic fields generated by the magnetic yoke ring and the retaining frame are superimposed on the magnetic field of the coil itself, significantly enhancing the overall magnetic field intensity. Additionally disposing the magnetic yoke ring and the retaining frame may enhance the magnetic field, and the coil may generate a stronger electromagnetic force or induced electromotive force under the same current, reducing energy loss.

The electromagnetic pump includes the induction coil structure and a pump assembly. The induction coil structure is disposed outside the pump assembly, and the winding coil, the magnetic yoke ring, and the retaining frame in the induction coil structure form a closed-loop magnetic field, which may provide the electromagnetic force for the iron core in the pump assembly after the winding coil is powered on, thereby driving the iron core to move. The iron core may drive a valve core to move, thereby adjusting a flow-out amount and a flow-out speed of liquid in the electromagnetic pump. The quantity of the disposed wires with the insulation layers is reduced in the induction coil mechanism disposed in the electromagnetic pump, so that the overall cost of the electromagnetic pump is reduced. The power consumption required by the induction coil structure is lower, so that the temperature rise effect of the induction coil structure may further be reduced, and the temperature rise effect of the electromagnetic pump is also reduced.

Further, the pump assembly is internally provided with a cavity, which has a function of self-priming pressurization. By applying pressure on a fluid in the cavity, an output fluid may generate large pressure, thereby meeting the requirement of outputting a high-pressure fluid. In addition, there is no fluid in the electromagnetic pump, so that there may be a situation that the iron core cannot move due to the large resistance of the iron core after the fluid dries up. By disposing the magnetization member in the induction coil structure, the magnetic field intensity may be enhanced, thereby making the electromagnetic force stronger, so that the initial electromagnetic force is enhanced, and the iron core is easier to overcome the resistance.

Further, by disposing the magnetization member on a frame body, the electromagnetic pump can divide the wire with the insulation layer of the coil into a plurality of parts. When the coil is powered on, the magnetization member blocks instantaneous currents of the plurality of parts, and the induced currents conducted to the magnetization member are correspondingly canceled out, to play a role of reducing the instantaneous currents. The magnetic fields around the magnetization member are enhanced. When powered on, a moving assembly is subjected to an enhanced electromagnetic force and reciprocates in a pipe body, to play a role of pumping water, which can not only increase an electromagnetic attraction force, but also reduce the usage of the wire with the insulation layer to a great extent, reduce the cost, enable the power to be smaller, and improve the use efficiency. In addition, the thermal conductivity of the magnetization member is strong, so that the internal heat of the coil can be conducted to the outside, to reduce temperature rise.

Furthermore, the coil in the existing electromagnetic pump is a pure solenoid coil, and more wires with the insulation layers are used. During working and operation, the coil generates a magnetic field, and the external retaining frame and the magnetic yoke ring form a magnetic loop. In this way, the magnetic field use efficiency is low, and the temperature rise is high. If the temperature rise is to be reduced, the usage of the wire may be increased, which may increase the production cost. Alternatively, a static iron core is added in a cylindrical pipe to improve the electromagnetic attraction force and the use efficiency. However, this approach also increases the production cost. In addition, during working, the static iron core and a movable iron core attract each other and collide, which easily destroys protection layers of the static iron core and the movable iron core, resulting in rust and contamination of media. The induction coil structure may solve this problem very well. The wire with the insulation layer in the middle is reduced, and the wire with the insulation layer is concentrated at the two ends, so that the wire with the insulation layer is retained at two poles with strong magnetic fields, and the quantity of the wires with the insulation layers in weak magnetic fields is reduced, thereby achieving the purpose of reducing the cost. In addition, the quantity of the wires with the insulation layers is reduced, so that the temperature rise may be reduced.

The electromagnetic valve includes the induction coil structure that is disposed internally, to drive the iron core in the pipe to move, so that the induction coil structure controls the opening and closure of the electromagnetic valve, thereby better adjusting the opening or closure of the electromagnetic valve.

The electromagnetic fluid pump includes the induction coil structure and a pipe. The pipe is internally provided with a fluid having electrical conductivity, and the induction coil structure provides an electromagnetic force, to provide a driving force for the fluid in the pipe, so that the fluid flows along the direction of the electromagnetic force in the pipe. The pump assembly such as the valve core is omitted in the pipe, so that a pump body is lightweight, and the overall cost is reduced. In addition, the fluid having the electrical conductivity may corrode the pump assembly, and the pump body may prevent the fluid from corroding the pump assembly, thereby prolonging the service life of the electromagnetic fluid pump.

### BRIEF DESCRIPTION OF THE DRAWINGS

The accompanying drawings herein are incorporated in the specification and constitute a part of the specification, show embodiments that are in accordance with this disclosure, and are used together with the specification for explaining the principle of this disclosure.

To describe the technical solutions in the embodiments of this disclosure or in the prior art more clearly, the following briefly describes the accompanying drawings required for describing the embodiments or the prior art. Apparently, those of ordinary skill in the art may still derive other accompanying drawings from these accompanying drawings without creative efforts.
FIG. 1 is a schematic structural diagram of an induction coil structure according to this disclosure;
FIG. 2 is a schematic structural diagram of an induction coil structure according to this disclosure;
FIG. 3 is a schematic structural sectional view I of an induction coil structure according to this disclosure;
FIG. 4 is a schematic structural diagram I of a connection of a bobbin, a magnetic yoke ring, and a winding coil that are of an induction coil structure according to this disclosure;
FIG. 5 is a schematic structural diagram II of a connection of a bobbin, a magnetic yoke ring, and a winding coil that are of an induction coil structure according to this disclosure;
FIG. 6 is a schematic structural diagram of a connection of a winding coil of an induction coil structure according to this disclosure;
FIG. 7 is a schematic structural diagram I of a connection of a bobbin, a magnetic yoke ring, a winding coil, and a magnetization member that are of an induction coil structure according to this disclosure;
FIG. 8 is a schematic structural diagram II of a connection of a bobbin, a magnetic yoke ring, a winding coil, and a magnetization member that are of an induction coil structure according to this disclosure;
FIG. 9 is a schematic structural partial sectional view of an induction coil structure according to this disclosure;
FIG. 10 is a schematic structural sectional view II of an induction coil structure according to this disclosure;
FIG. 11 is a schematic structural diagram of a magnetization member of an induction coil structure according to this disclosure;
FIG. 12 is a schematic structural exploded view of an induction coil structure according to this disclosure;
FIG. 13 is a schematic enlarged view of a part P in FIG. 11;
FIG. 14 is a schematic structural sectional view III of an induction coil structure according to this disclosure;
FIG. 15 is a schematic structural sectional view IV of an induction coil structure according to this disclosure;
FIG. 16 is a simulation comparison diagram of an electromagnetic force of an induction coil structure according to this disclosure;
FIG. 17 is a schematic structural diagram I of an electromagnetic pump according to this disclosure;
FIG. 18 is a schematic structural diagram II of an electromagnetic pump according to this disclosure;
FIG. 19 is a schematic structural sectional view along A-A' in FIG. 18;
FIG. 20 is a schematic enlarged view of a part Q in FIG. 19;
FIG. 21 is a schematic structural exploded view of an electromagnetic pump according to this disclosure;
FIG. 22 is a schematic structural diagram of a base body of an electromagnetic pump according to this disclosure;
FIG. 23 is a schematic structural sectional view of an electromagnetic pump provided with a buffer piece according to this disclosure;
FIG. 24 is a temperature rise change table of an electromagnetic pump in which a coil is not provided with a magnetization member according to this disclosure; and
FIG. 25 is a temperature rise change table of an electromagnetic pump in which a coil is provided with a magnetization member according to this disclosure.

Reference numerals in the accompanying drawings:
100. electromagnetic pump;
1. induction coil structure; 11. winding coil; 12. frame body; 121. placement block; 1211. arc-shaped groove; 1212. limiting member; 122. retaining frame; 123. bobbin; 124. coupling; 125. mounting position; 13. magnetization member; 131. clamping position; 132. first magnetic piece; 133. second magnetic piece; 14. magnetic yoke ring; 141. upper magnetic yoke ring; 142. lower magnetic yoke ring; 15. encapsulation layer; 16. first contact piece; 17. second contact piece;
2. pump assembly; 200. cavity; 21. pipe body; 211. stepped hole; 212. buffer piece; 22. moving assembly; 221. iron core; 2211. conical hole; 23. reset assembly; 231. first elastic member; 232. second elastic member; 233. third elastic member; 24. sealing assembly; 241. sealing rubber head; 2411. arc-shaped block; 242. gasket; 2421. movable sealing ring; 2422. static sealing ring; 25. valve core; 251. limiting block; 252. circular hole; 26. water outlet pipe; 261. fourth elastic member; 262. base body; 2621. protruding block; 2622. abutting block; 263. groove.

### DETAILED DESCRIPTION OF THE EMBODIMENTS

To make the objectives, technical solutions, and advantages of this disclosure clearer, the following clearly and completely describes the technical solutions in this disclosure with reference to the accompanying drawings in this disclosure. Apparently, the described embodiments are some but not all of the embodiments of this disclosure. All other embodiments obtained by those of ordinary skill in the art based on the embodiments of this disclosure without creative efforts shall fall within the protection scope of this disclosure.

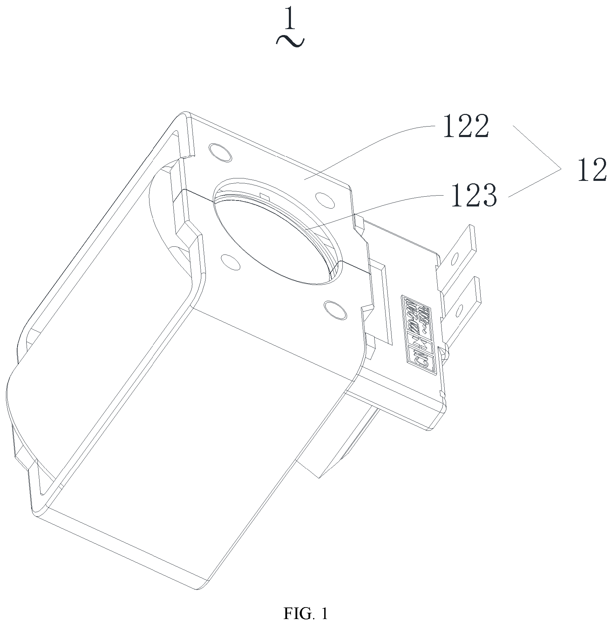

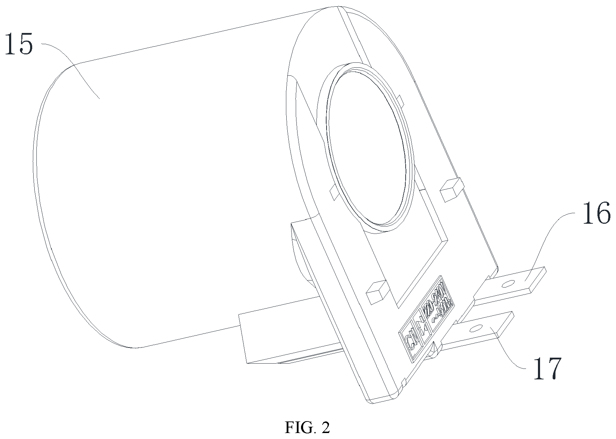

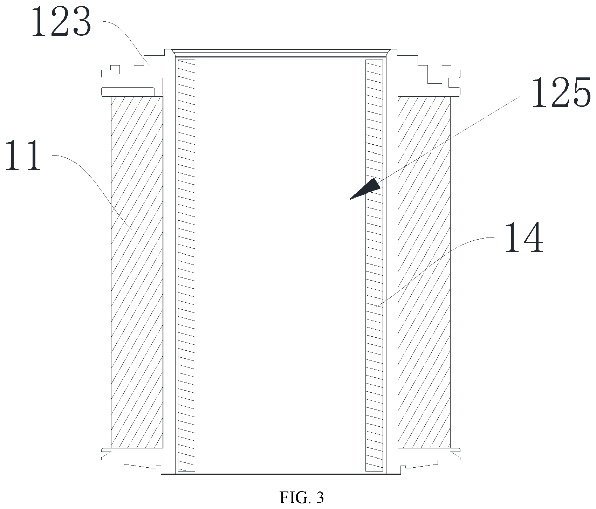

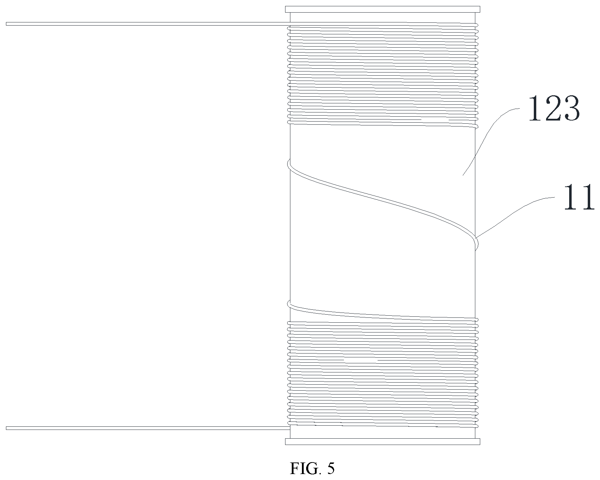

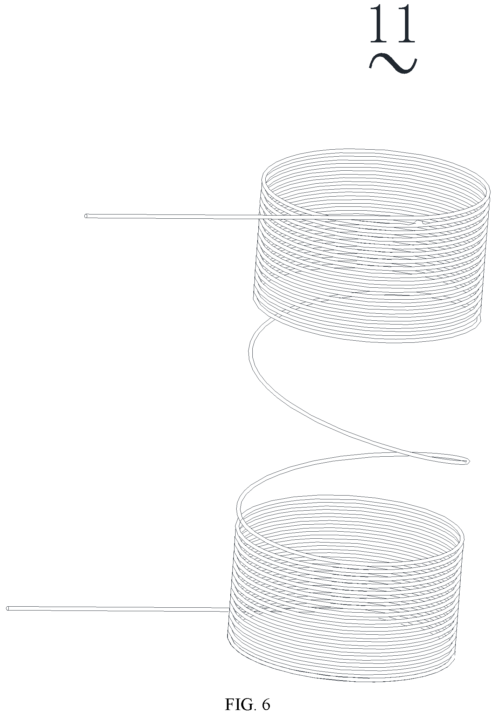

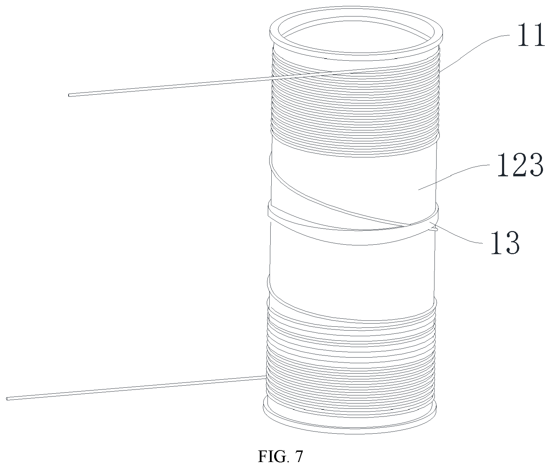

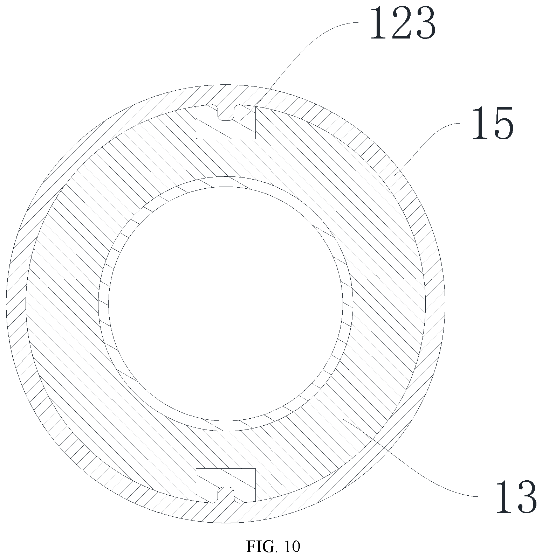

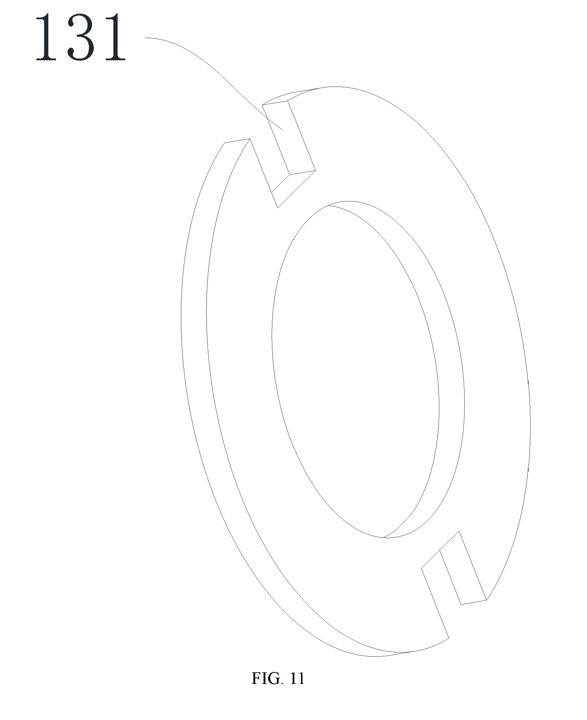

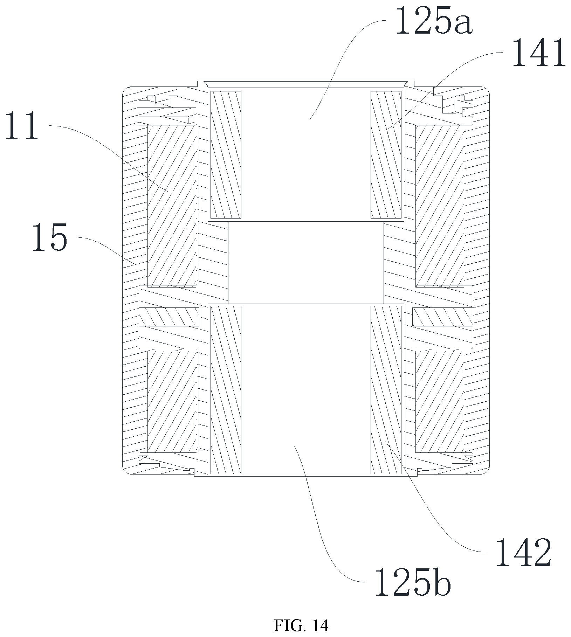

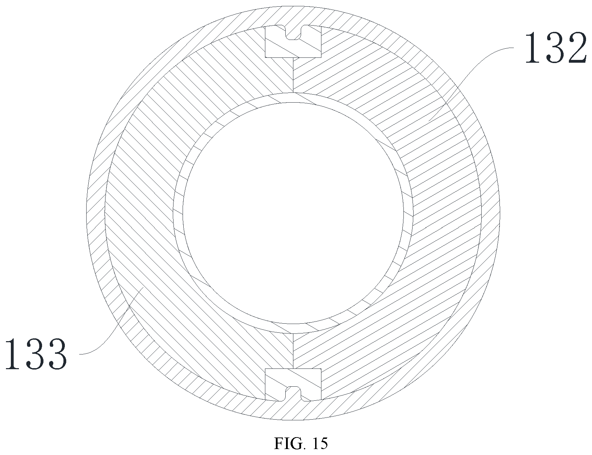

According to a first aspect, referring to FIG. 1 to FIG. 16, this disclosure provides an induction coil structure 1, including at least one winding coil 11, at least one magnetic yoke ring 14, and a frame body 12. The frame body 12 includes a bobbin 123 and a retaining frame 122, and the bobbin 123 and the retaining frame 122 are connected. The winding coil 11 is disposed on an outer wall of the bobbin 123, at least one mounting position 125 is disposed in the bobbin 123, and the magnetic yoke ring 14 is disposed on the mounting position 125. The quantity of the disposed mounting positions 125 is matched with the quantity of the disposed magnetic yoke rings 14, and one magnetic yoke ring 14 is disposed on one mounting position 125. The retaining frame 122 is disposed on the periphery of the winding coil 11, and the winding coil 11, the magnetic yoke ring 14, and the retaining frame 122 form a closed-loop magnetic field. The winding coil 11 is formed by winding a wire with an insulation layer, and the winding density of the winding coil 11 at two ends of the bobbin 123 is greater than the winding density of the winding coil 11 in the middle of the bobbin 123.

Specifically, the winding coil 11 and the magnetic yoke ring 14 are disposed on the bobbin 123 respectively, the retaining frame 122 is disposed on an outer side of the bobbin 123, and the winding coil 11 is mounted outside the bobbin 123. The retaining frame 122, the magnetic yoke ring 14, and the magnetization member 13 is used as a magnetizer, the magnetic yoke ring 14 is mounted on the mounting position 125 in the bobbin 123, the winding coil 11 generates a magnetic field after being powered on, an external magnetic field performs magnetic conduction through the retaining frame 122, and the magnetic yoke ring 14 performs magnetic conduction on an internal magnetic field and works together with the retaining frame 122 to enable the magnetic field to form a closed loop. In this embodiment, two magnetic yoke rings 14 are disposed and include an upper magnetic yoke ring 141 and a lower magnetic yoke ring 142. Two mounting positions 125 are disposed and include a first mounting position 125a and a second mounting position 125b. The upper magnetic yoke ring 141 is disposed on the first mounting position 125a, and the lower magnetic yoke ring 142 is disposed on the second mounting position 125b. The specific quantity of the disposed magnetic yoke rings 14 and mounting positions 125 is not limited to two in this embodiment and may be set correspondingly according to specific actual situations.

The winding coil 11 is a solenoid coil, and the wire with the insulation layer that forms the winding coil 11 may be any type of wire with an insulation protection layer disposed on an outer surface, such as an enameled wire or an electrical wire, which may ensure that the wires are insulated from each other during winding. When a current is applied to the winding coil, a generated electromagnetic force is along an axial direction of the winding coil.

As an embodiment, the bobbin 123 may not be disposed in the induction coil structure 1. In the winding coil structure 1, the wire with the insulation layer is made to the winding coil 11 by winding in a mold, and then the mold is taken out of the winding coil 11, thereby completing the making of the winding coil 11, or the wire is directly wound to be made to the winding coil. In other words, if the winding coil 11 has sufficient strength, the bobbin 123 may not be disposed in the winding coil directly, thereby achieving sufficient support and forming one spiral coil.

The retaining frame 122 is sleeved on the outer side of the bobbin 123, and the retaining frame 122 and the bobbin 123 are provided with through holes respectively. The through holes may be provided with mechanisms such as a pipe and used for transferring a fluid. A magnetic action member is disposed in the pipe, for example, an iron core, and the magnetic action member is driven to move in the pipe through the magnetic field applied by the winding coil 11.

It may be understood that the outer wall of the bobbin 123 is provided with the winding coil 11 wound by the wire with the insulation layer, the magnetic yoke ring 14 is disposed internally, and the retaining frame 122 is disposed outside the bobbin 123. The magnetic yoke ring 14, the winding coil 11, and the retaining frame 122 form one closed-loop magnetic field. The magnetic yoke ring 14 and the retaining frame 122 are disposed on the induction coil structure 1, so that magnetic conduction may be performed from the inside and outside of the bobbin 123, a direction of the magnetic field generated by powering on the winding coil 11 may be along the magnetic yoke ring 14 and the retaining frame 122, magnetic field intensity of the magnetic field generated by the winding coil 11 may be increased, and magnetic field lines can be guided and concentrated. Magnetic fields generated by the magnetic yoke ring 14 and the retaining frame 122 are superimposed on the magnetic field of the winding coil 11 itself, significantly enhancing the overall magnetic field intensity. Additionally disposing the magnetic yoke ring 14 and the retaining frame 122 may enhance the magnetic field, and the winding coil 11 may generate a stronger electromagnetic force or induced electromotive force under the same current, reducing energy loss.

Further, the winding coil 11 is mounted on the bobbin 123, the winding coil 11 may generate the magnetic field after being powered on, and the winding coil 11 is formed by winding the wire with the insulation layer. The quantity of windings of the wire with the insulation layer of the winding coil 11 disposed at the two ends of the bobbin 123 is greater than the quantity of windings of the wire with the insulation layer in the middle, so that the wire with the insulation layer is retained at two ends with high magnetic field intensity on the induction coil structure 1, the wire with the insulation layer of the winding coil in the middle of the bobbin 123 is reduced, and high magnetic field intensity of magnetic poles at two ends of the magnetic field is adapted, thereby reducing the usage of the wire with the insulation layer in the middle of the winding coil 11. Therefore, the cost of the overall induction coil structure 1 is reduced, and the power is smaller.

In addition, when the induction coil structure 1 is disposed in a manner of the segmented winding coil 11, the winding density of the winding coil 11 disposed in the middle of the bobbin 123 is generally less than the winding density of the winding coil disposed at the two ends of the bobbin 123, so that the quantity of the disposed wires with the insulation layers on the winding coil 11 in the middle may be reduced, and the usage of the wire with the insulation layer in the middle of the winding coil 11 may be reduced. Therefore, the cost of the overall induction coil structure 1 is reduced, and the power is smaller.

Optionally, the bobbin 123 is made of any one of insulation materials such as plastic, rubber, and ceramic, that is, the bobbin 123 is not magnetically conductive and does not affect the magnetic fields generated by the magnetic yoke ring 14, the retaining frame 122, and the winding coil 11.

The induction coil structure 1 includes at least one magnetization member 13, and the magnetization member 13 is disposed in the middle of the winding coil 11 or between two adjacent winding coils 11. Specifically, the magnetization member 13 is used for improving the magnetic force. Since the existing coil generates a large instantaneous current at the moment of being powered on, resulting in a poor magnetism gathering capability, adding the magnetization member 13 between the winding coils 11 or adding the magnetization member 13 between the adjacent winding coils 11 may reduce the instantaneous current, increase the heat conduction and heat dissipation, and increase the use of the magnetic field. Specifically, when the winding coil 11 is powered on, the magnetization member 13 blocks instantaneous currents of a plurality of parts, and induced currents conducted to the magnetization member 13 are correspondingly canceled out, to play a role of reducing the instantaneous currents. Since the magnetization member 13 has magnetism, a magnetic field around the magnetization member 13 is enhanced, so that an electromagnetic force subjected by the magnetic action member mounted around the induction coil structure 1 is also enhanced.

Specifically, the magnetization member 13 is disposed on the bobbin 123, the magnetization member 13 may adjust a disposed position of the magnetization member according to requirements, and the magnetization member 13 may be close to the corresponding magnetic yoke ring 14, thereby enhancing the magnetic field generated by the corresponding magnetic yoke ring 14, to generate a stronger electromagnetic force. The magnetization member 13 is disposed between two adjacent magnetic yoke rings 14, so that magnetic field intensity generated by the two magnetic yoke rings 14 may be equal.

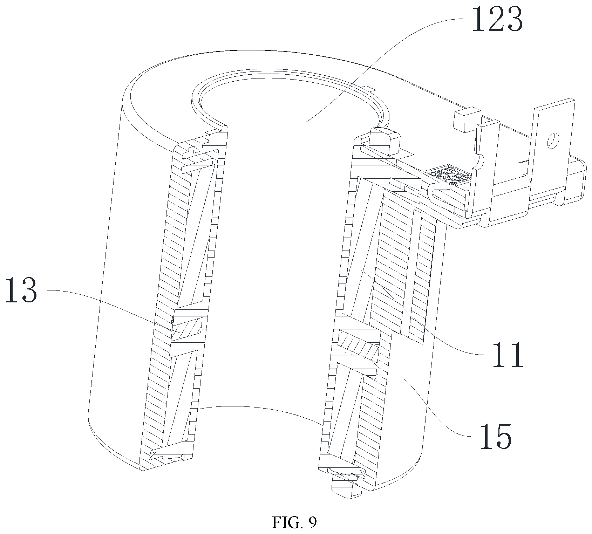

The magnetization member 13 is disposed in an annular shape (as shown in FIG. 9 to FIG. 11). The magnetization member 13 is sleeved on the bobbin 123, and the magnetization member 13 surrounds the outer wall of the bobbin 123. The bobbin 123 is provided with at least one placement block 121, the placement block 121 is sleeved on the outer side of the bobbin 123, and the placement block 121 is detachably connected to the bobbin 123. The magnetization member 13 is provided with a clamping position 131, the placement block 121 is provided with an arc-shaped groove 1211, and the magnetization member 13 is mounted in the arc-shaped groove 1211. In addition, the placement block 121 is provided with a limiting member 1212 on the arc-shaped groove 121, and the limiting member 1212 is matched with the clamping position 131. It may be understood that the magnetization member 13 may be disposed on the bobbin 123 in a direct surrounding manner, or the placement block 121 is disposed on the bobbin 123 for mounting the magnetization member 13. Disposing the placement block 121 may prevent the magnetization member 13 from moving on the bobbin 123 and is more conducive to mounting at the same time.

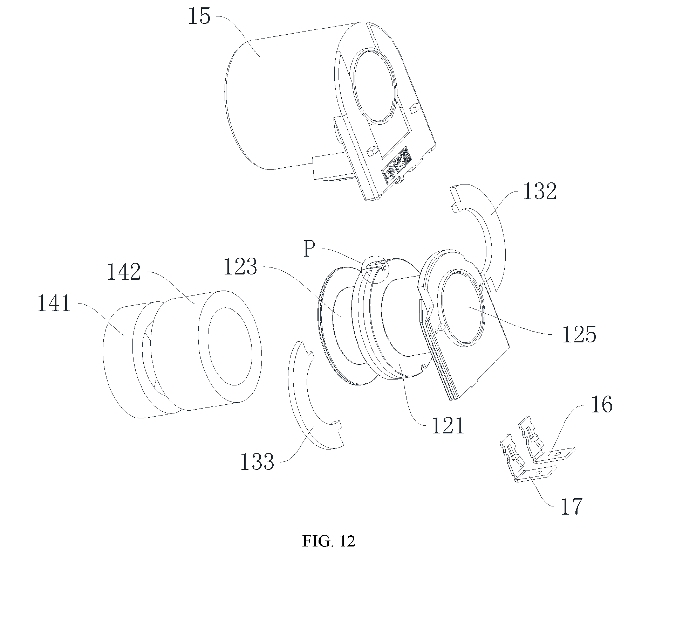

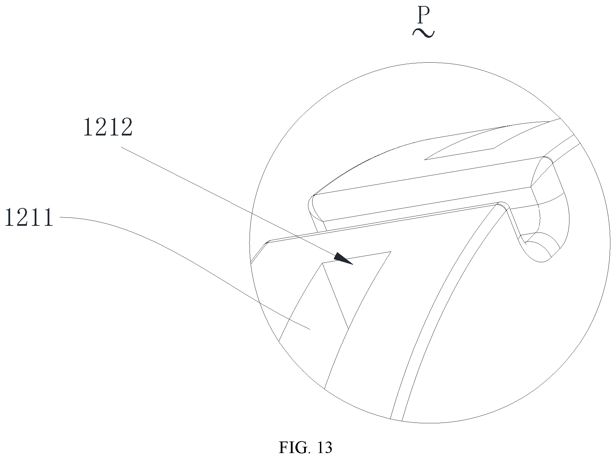

Specifically, the magnetization member 13 surrounds the placement block 121 on the bobbin 123, and the placement block 121 is provided with the arc-shaped groove 1211 matched with a shape of the magnetization member 13 (as shown in FIG. 12 and FIG. 13). During mounting, the magnetization member 13 is mounted according to a shape direction of the arc-shaped groove 1211. During mounting, the magnetization member 13 is provided with the clamping position 131, and according to a disposed position of the limiting member 1212 on the bobbin 123, the magnetization member 131 is mounted by corresponding the clamping position 131 to the limiting structure, so that the magnetization member 13 may be mounted according to a position of the clamping position 131 corresponding to the limiting member 1212, and the mounting is more convenient. In addition, the clamping position 131 can fix the magnetization member 13 to the limiting member 1212 on the bobbin 123, to avoid falling off. When the winding coil 11 is powered on, the magnetization member 13 blocks instantaneous currents of two parts, and the induced currents conducted to the magnetization member 13 are correspondingly canceled out, to play a role of reducing the instantaneous currents.

As an embodiment, the magnetization member 13 is disposed in a split manner. The magnetization member 13 is divided into a plurality of parts in a split manner, which are distributed on an outer side of the frame body 12 annularly. The magnetization member 13 includes at least two magnetic members, and all the magnetic members may form one annulus. In this embodiment, as shown in FIG. 12 to FIG. 15, the magnetization member 13 is disposed in a split structure, and the magnetization member 13 includes a first magnetic piece 132 and a second magnetic piece 133. The first magnetic piece 132 and the second magnetic piece 133 form one annulus. The magnetization member 13 is an arc-shaped piece body, which is mounted on the bobbin 123 and distributed annularly. The first magnetic member and the second magnetic member are snapped and mounted on the bobbin 123. In addition, the first magnetic member and the second magnetic member are provided with grooves 263 respectively. The grooves 263 form the clamping position 131 to correspond to the limiting member 1212 on the placement block 121 for snapping. It may be understood that the magnetization member 13 is divided into the first magnetic member and the second magnetic member for mounting, which may be mounted on the bobbin 123 after the bobbin 123 is manufactured, so that the mounting is more convenient.

As an embodiment, the magnetization member 13 is of a column shape and is disposed on the bobbin 123. The retaining frame 122 is disposed on the outer side of the bobbin 123. The winding coil 11 generates the magnetic field when powered on, the external magnetic field performs magnetic conduction through the retaining frame 122, and the magnetic yoke ring 14 performs magnetic conduction on the internal magnetic field and works together with the retaining frame 122 to enable the magnetic field to form a closed loop. During this period, the magnetization member 13 can improve the magnetic force. Correspondingly, the placement block 121121 is of a column shape, which is disposed on the outer side of the bobbin 123 and is integrally formed with the bobbin 123. The clamping position 131 is disposed corresponding to the limiting member 1212, and the magnetization member 13 is fixed on the bobbin 123.

As an embodiment, the magnetization member 13 is made of a magnetically conductive material or a non-magnetically inductive material. Specifically, the magnetization member 13 uses the magnetically conductive material, which may select any one of a ferromagnetic material, a ferrimagnetic material, and the like. In this embodiment, the magnetization member 13 uses the ferromagnetic material and is made to a sheet shape. In addition, the magnetization member 13 uses the non-magnetically inductive material, which may be made of a plastic material, to avoid the generation of an eddy current on the magnetization member 13, thereby reducing the temperature rise effect.

As an embodiment, an air gap is formed between the magnetization member 13 and the retaining frame 122. There is a certain distance between the magnetization member 13 and the retaining frame 122, and a large air gap may increase the magnetic field intensity. In addition, to achieve the purpose of increasing the magnetic isolation effect and suppressing eddy currents, the size of the air gap may be reduced, or even no air gap is formed between the magnetization member 13 and the retaining frame 122, that is, the edge of the magnetization member 13 is in contact with the inner wall of the retaining frame 122, thereby maximizing the effects of magnetic isolation and eddy current suppression.

The induction coil structure 1 includes a first contact piece 16 and a second contact piece 17. The first contact piece 16 and the second contact piece 17 are mounted on the retaining frame 122, the winding coil 11 includes two wiring terminals, and the first contact piece 16 and the second contact piece 17 are connected to one wiring terminal respectively. Specifically, the first contact piece 16 and the second contact piece 17 are connected to a power supply, and the first contact piece 16 and the second contact piece 17 are connected to all the winding coils 11 simultaneously, to power the winding coils 11.

Optionally, the induction coil structure 1 includes a diode, one end of the diode is connected to any one winding coil 11, and the other end of the diode is connected to the first contact piece 16 or the second contact piece 17. The diodes connected to the winding coils 11 at the two ends of the bobbin 123 have different directions, so that when an alternating current is connected, current directions at the two ends may be different, and electromagnetic forces applied may be different. Therefore, the magnetic action member in the pipe mounted on the induction coil structure 1 may reciprocate. It may be understood that the purpose of connecting the diode is to fix the current direction, or to fix the current direction according to human needs. When the winding coil 11 in the induction coil structure 1 is connected to a direct current, since the input direction of the direct current is fixed, the terminals of the winding coil 11 do not need to be connected to the diode. When the winding coil 11 is connected to the alternating current, a rapid direction change frequency or a variable input direction may cause the magnetic action member to remain unchanged or vibrate at an original position in the pipe. To move the magnetic action member, the diode needs to be connected to perform wave chopping processing on the alternating current, so that an input current direction of the alternating current is fixed, thereby fixing the direction of the magnetic field generated by the winding coil 11 and the direction of the electromagnetic force.

One winding coil 11 is disposed on the bobbin 123, and the quantity of windings at the two ends of the winding coil 11 is greater than the quantity of windings in the middle. On the one winding coil 11, the wire with the insulation layer is disposed with high density at the two ends and low density in the middle. Since the winding coil 11 has the maximum magnetic field intensity at the two ends and the weakest magnetic field intensity in the middle, the quantity of the wires with the insulation layers used in the middle is greatly reduced, so that the usage of the wire with the insulation layer may be reduced to a great extent, and the cost is reduced.

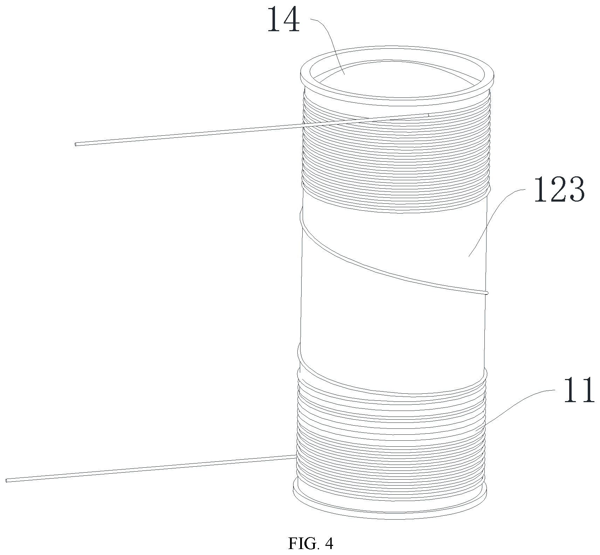

Particularly, only one wire with the insulation layer may be disposed in the middle of the winding coil 11 (as shown in FIG. 4 to FIG. 7). It may be understood that the quantity of the wires with the insulation layers in the middle of the winding coil 11 may be reduced. To reduce the usage of the wire with the insulation layer to a great extent, the quantity of the wires with the insulation layers in the middle may be reduced to one. While ensuring that the winding coil 11 can be electrically connected normally, the quantity of the wires with the insulation layers in the middle is reduced, and the amount of copper used in the winding coil 11 is reduced.

As an embodiment, a magnetization member 13 is disposed in the middle of one winding coil 11. The magnetization member 13 may divide the wire with the insulation layer on the winding coil 11 into two parts. When the wire with the insulation layer is powered on, the magnetization member 13 blocks instantaneous currents of the two parts simultaneously, and induced currents conducted to the magnetization member 13 are canceled each other out. Magnetic fields around the magnetization member 13 are all enhanced, and a magnetic force subjected by an iron core 221 during powering on will be enhanced. The thermal conductivity of the magnetization member 13 is strong, which may rapidly conduct the internal heat of the coil to the outside. The magnetization member 13 divides the winding coil 11 into two segments and is disposed in the middle of the winding coil 11. The position at which the magnetization member 13 is located does not need to dispose the winding coil 11, and a large magnetic force can be provided, to work together with the magnetic yoke ring 14 to perform magnetic attraction on the magnetic action member in the pipe, so that the magnetic action member moves in a horizontal direction in the pipe. Furthermore, the magnetization member 13 may be close to any one of the segments of the bobbin 123, thereby enhancing magnetic field intensity of any end, so that an electromagnetic force generated by one corresponding end is stronger, to adapt to the requirement that different ends require different electromagnetic forces.

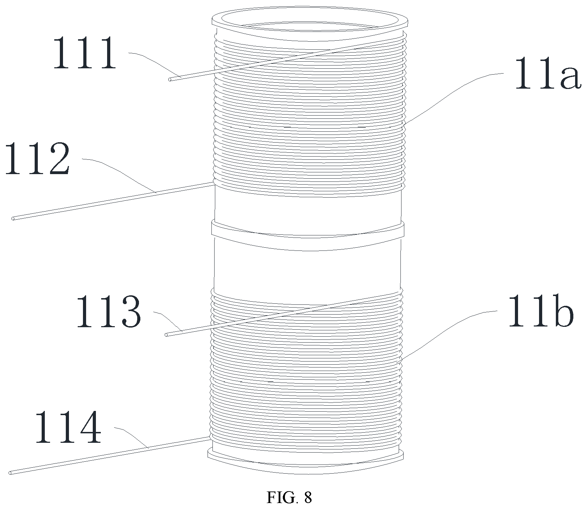

The induction coil structure 1 is provided with at least two winding coils 11 (as shown in FIG. 8), the winding coils 11 are connected in parallel, and the winding coils 11 are disposed on the outer wall of the bobbin 123 in a segmented manner. The winding density of the winding coils 11 disposed at the two ends of the bobbin 123 is first density, and the winding density of the winding coils 11 disposed in the middle of the bobbin 123 is second density, and the first density is greater than the second density. The winding coil 11 is disposed on the bobbin 123 at equal or unequal intervals, and directions of currents introduced into any two of the winding coils 11 are the same or opposite.

It may be understood that the induction coil structure 1 is provided with at least two winding coils 11, that is, disposed in a manner of the segmented winding coils 11. The winding density of the winding coils 11 disposed in the middle of the bobbin 123 is generally less than the winding density of the winding coils 11 disposed at the two ends of the bobbin 123, so that the quantity of the disposed wires with the insulation layers on the winding coils 11 in the middle may be reduced, and the usage of the wire with the insulation layer in the middle of the winding coils 11 may be reduced. Therefore, the cost of the overall induction coil structure 1 is reduced, and the power is smaller. Further, power supplies of different current values may be input into various winding coils 11 respectively, so that the induction coil structure 1 may apply different electromagnetic forces to corresponding segments, thereby coping with situations requiring corresponding magnitudes of electromagnetic forces. Therefore, the corresponding electromagnetic forces may be better applied, to perform fine driving control.

When the winding coils 11 are disposed in a manner of the segmented coils, the winding coils 11 are disposed on the bobbin 123 at equal or unequal intervals. The distance between the winding coils 11 may be set according to an electromagnetic force required by an actual corresponding position, to adapt to an actual requirement on a current position.

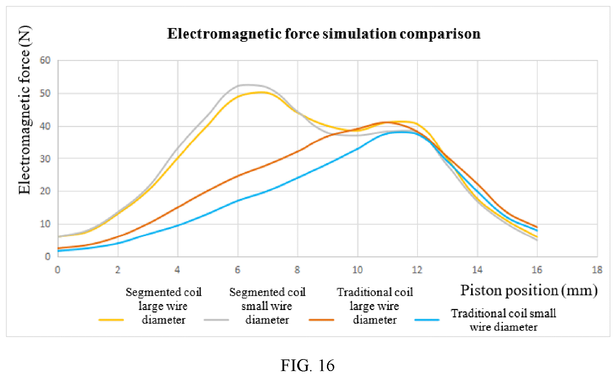

It may be known from FIG. 16 that a segmented coil large-wire-diameter curve and a segmented coil small-wire-diameter curve in the figure are electromagnetic force simulation curves generated by segmented coils of the current application, while a traditional coil large-wire-diameter curve and a traditional coil small-wire-diameter curve are electromagnetic force simulation curves generated by traditional coils. The above curves are obtained under the situation that stroke balance points are the same.

Specifically, the current application has the segmented coils, and the traditional coils, whether large-wire-diameter coils or small-wire-diameter coils, are completely wound around the bobbin. Compared with the traditional coils, the segmented coils provide larger initial acceleration for the magnetic action member in the pipe, and the segmented coils generate larger electromagnetic forces and have quicker generation speeds than the traditional coils. Further, the segmented coils provide larger electromagnetic forces at the initial position more efficiently and may better reduce the risk of the magnetic action member getting stuck in the pipe. Further, as shown by the two traditional coil curves in FIG. 16, the electromagnetic forces of the traditional coils gradually decrease after reaching maximum electromagnetic force values, and one peak value appears. As shown in the two segmented coil curves in the figure, in the induction coil structure 1 of this disclosure, a second peak value is generated within a subsequent period of time after the electromagnetic forces reach a first peak value, that is, there are two peak values. The first peak value is the maximum electromagnetic force value. In the electromagnetic force simulation curves of the segmented coils, compared with the electromagnetic force simulation curves of the traditional coils, the segmented coils may provide larger electromagnetic forces. At the same time, the electromagnetic forces reach the electromagnetic forces of the first peak value more quickly, and the segmented coils respond more quickly. Since there are two peak values, the high electromagnetic forces may last longer and have longer strokes.

In this embodiment, the position of the magnetic action member is detected by the movement of a piston. The piston moves synchronously with the magnetic action member, and the piston provides a driving force for the magnetic action member. The segmented coils are disposed by using two winding coils. When the segmented coils use more than two winding coils, the electromagnetic force simulation curves generated by the segmented coils may have more than two peak values. Correspondingly, the electromagnetic forces of a high value last longer and maintain longer strokes.

As an embodiment, two winding coils 11 are disposed on the bobbin 123 (as shown in FIG. 8 and FIG. 9), which include a first winding coil 11a and a second winding coil 11b. The first winding coil 11a and the second winding coil 11b are sequentially disposed on an outer surface of the bobbin 123, and the first winding coil 11a and the second winding coil 11b are disposed close to the two ends of the bobbin 123 respectively. During powering on, the alternating current may be input, and the alternating current may change directions of currents input into the first winding coil 11a and the second winding coil 11b within a certain time. Through the directions of the currents of the first winding coil 11a and the second winding coil 11b, a movement direction of the magnetic action member in the pipe may be changed. The first winding coil 11a and the second winding coil 11b are connected in parallel. The first winding coil 11a includes a first terminal 111 and a second terminal 112, and the second winding coil 11b includes a third terminal 113 and a fourth terminal 114. The first terminal 111 and the third terminal 113 are connected to the first contact piece 16, and the second terminal 112 and the fourth terminal 114 are connected to the second contact piece 17.

To make the magnetic field intensity generated by the two winding coils 11 stronger, a magnetization member 13 may be disposed in a space between the first winding coil 11a and the second winding coil 11b, and the magnetic field intensity generated between the first winding coil 11a and the second winding coil 11b may be increased through the magnetization member 13.

When any one winding coil 11 of the first winding coil 11a and the second winding coil 11b needs to generate a larger electromagnetic force, the magnetization member 13 may be disposed close to the corresponding winding coil 11, so that the magnetic field intensity of the corresponding winding coil 11 is increased, thereby enhancing the electromagnetic force generated by the winding coil 11. For example, if an electromagnetic force generated by a position at which the first winding coil 11a is located needs to be adjusted and increased, the magnetization member 13 may be disposed close to the first winding coil 11a, thereby improving the electromagnetic force generated by the first winding coil 11a, which may provide a larger driving force.

The direction of the current input into the first winding coil 11a is opposite to the direction of the current input into the second winding coil 11b. Specifically, the first winding coil 11a and the second winding coil 11b are disposed at the two ends of the bobbin 123. Since the directions of the currents input into the first winding coil 11a and the second winding coil 11b are different, the direction of the electromagnetic force generated by the first winding coil 11a is opposite to the direction of the electromagnetic force generated by the second winding coil 11b. Under the action of the electromagnetic force generated by the first winding coil 11a or under the action of the electromagnetic force generated by the second winding coil 11b, the magnetic action member in the pipe moves in different directions, and the magnetic action member may reciprocate in the pipe.

Optionally, the direct current or the alternating current may be input into the first winding coil 11a and the second winding coil 11b. When the direct current is input, winding directions of the first winding coil 11a and the second winding coil 11b are different, and the terminals of the winding coils 11 are connected in parallel, so that after the power supply is input, the direction of the electromagnetic force generated by the first winding coil 11a is opposite to the direction of the electromagnetic force generated by the second winding coil 11b. When the alternating current is input, the coil to which the current is input is controlled through diodes disposed on the first contact piece 16 and the second contact piece 17, and directions of the disposed diodes are opposite, so that the power supply selects to be input into either the first winding coil 11a or the second winding coil 11b, thereby applying electromagnetic forces in different directions at the two ends of the bobbin 123.

Optionally, to make the current input into the first winding coil 11a or the second winding coil 11b controllable, adjustable loads may be disposed on the first contact piece 16 and the second contact piece 17, to change the input current by adjusting the sizes of the loads.

As an embodiment, more than two winding coils 11 are disposed on the bobbin 123. The winding coils 11 are disposed in a segmented manner, and the winding coils 11 may be mounted on the bobbin 123 at equal or unequal intervals, to provide the electromagnetic forces at corresponding positions. Optionally, the winding coils 11 may be disposed at the two ends of the bobbin 123 uniformly or disposed along the bobbin 123 at equal intervals.

Particularly, one magnetization member 13 is disposed between two adjacent winding coils 11. It may be understood that a plurality of winding coils 1111 are disposed. The quantity of the disposed magnetization members 13 is one less than the quantity of the disposed corresponding winding coils 11. The winding coils 11 and the magnetization member 13 are disposed on the bobbin 123 together, and the winding coils 1111 are electrically connected. The winding coils 11 on the bobbin 123 are disposed in a segmented manner. Compared with the coils disposed on the bobbin 123 in a manner of a whole segment, the manner of dividing into a plurality of segments can save the cost and reduce the usage of the wire with the insulation layer. In addition, disposing the winding coils 11 in a segmented manner may electrically control various winding coils 11 respectively, thereby making the directions and magnitudes of the electromagnetic forces generated by various winding coils 11 controllable.

The quantity of the magnetic yoke rings 14 is increased corresponding to the plurality of winding coils 11, which is not limited to two magnetic yoke rings 14. A plurality of magnetic yoke rings 14 may be disposed, so that the corresponding winding coils 11 may better perform magnetic conduction in the bobbin 123 through the magnetic yoke rings 14, thereby ensuring the magnetic field intensity. The quantity of the disposed magnetic yoke rings 14 is set according to actual situations. As an embodiment, the winding density of the wires with the insulation layers of the winding coils 11 and the lengths of the winding coils 11 are adjusted according to the magnitude of the actually applied electromagnetic forces. It may be understood that when larger electromagnetic forces need to be applied, the winding density of the wires with the insulation layers or the lengths of the winding coils 11 may be increased, so that larger electromagnetic forces may be generated under the same current values. Correspondingly, when small electromagnetic forces need to be applied, correspondingly, the density of the wires with the insulation layers is reduced or the length of the winding coils 11 is shortened.

As an embodiment, a power supply is input into the induction coil structure 1 initially, and a power supply of a preset first current value is applied to the winding coils 11 in the middle of the bobbin 123. After the power supply of the first current value is applied for a third preset time period, a power supply of a preset second current value is applied to the winding coils 11 in the middle of the bobbin 123, and the first current value is greater than the second current value.

Specifically, during starting, large current values are applied to the winding coils 11, and the winding coils 11 generate the electromagnetic forces, to generate magnetic action forces on the magnetic action member mounted in the induction coil structure 1. After starting for a period of time, the current value of the applied power supply is reduced to the second current value, which may meet some situations that a large driving force needs to be provided in an initial state at a specific position. For example, when the magnetic action member is started, the inside of the cavity 200 of the pipe at which the magnetic action member is located is in a dry state, and the magnetic action member needs to overcome large resistance in the cavity 200 of the pipe, resulting in a larger driving force than the driving force required under normal situations. Therefore, during starting, larger currents need to be provided for the winding coils 11 in the middle, to provide a larger driving force for the iron core 221, thereby starting the iron core 221.

As an embodiment, current values introduced into the winding coils 11 disposed at the two ends of the bobbin 123 are less than current values introduced into the winding coils 11 in the middle of the bobbin 123. Specifically, the current values input at the two ends are less than the current values in the middle, so that the electromagnetic force on the magnetic action member close to the two ends of the pipe may be reduced, and the speed when moving to the two ends is reduced, thereby avoiding rapidly approaching two ports of the pipe, preventing the occurrence of water hammer effect during liquid transportation of the pipe, and avoiding damage to the inner wall of the pipe. At the same time, the current values in the middle are large, so that the magnetic action member may overcome the action forces generated by springs at the two ends, and mechanisms such as the valve core 25 may move normally.

The winding coils are connected to the alternating current, and various winding coils may select to be connected to the diodes or not connected to the diodes correspondingly. For example, the winding coil at the port is not connected to the diode, so that the magnetic action member remains stationary at the port or slows down its moving state by connecting to the alternating current; and the diode is connected, so that the moving speed of the magnetic action member may be accelerated gradually. The diodes are connected or the diodes are not connected according to specific requirements.

As an embodiment, according to the power supply connected to the winding coils 11, a current switching cycle is controlled through a timer or a PWM signal, to control the output flow and pressure stability of the pump.

In a specific embodiment, the induction coil structure 1 is externally connected to a current adjustment module, to adjust the magnitudes of the currents of the coils, thereby reducing energy waste.

In another specific embodiment, the induction coil structure 1 is externally connected to a control module and a display screen, which are used for controlling and monitoring a working state of the induction coil structure 1 by an operator, thereby improving the working efficiency and reducing the damage to the electromagnetic pump due to operational errors.

As an embodiment, the induction coil structure 1 includes an encapsulation layer 15, and the encapsulation layer 15 is covered on an outer surface of the winding coil 11. The encapsulation layer 15 plays a role of protecting the wire with the insulation layer of the winding coil 11 and also providing insulation during high-voltage powering on.

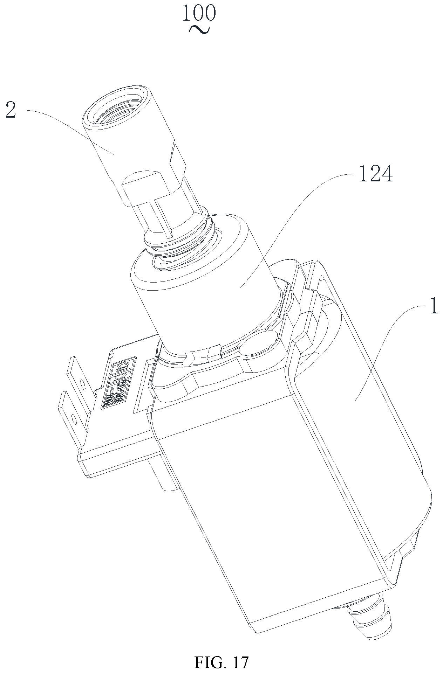

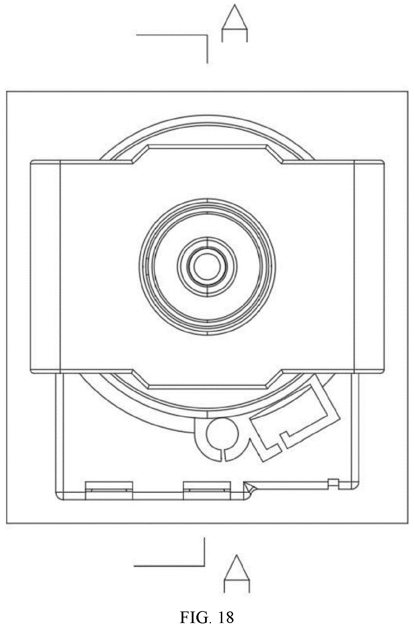

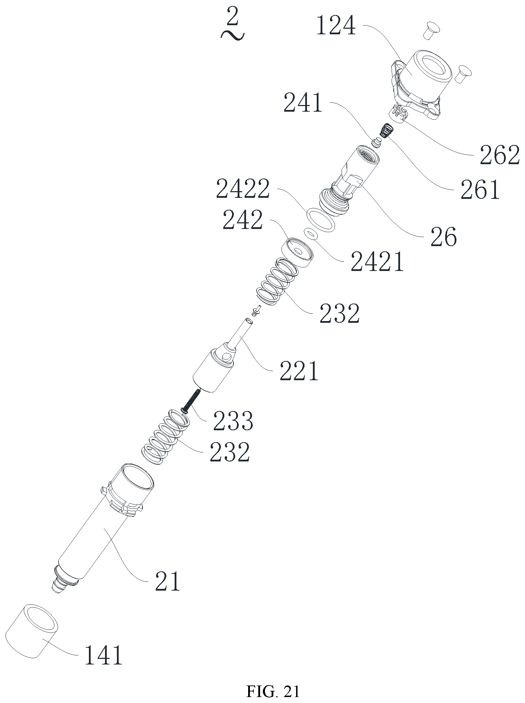

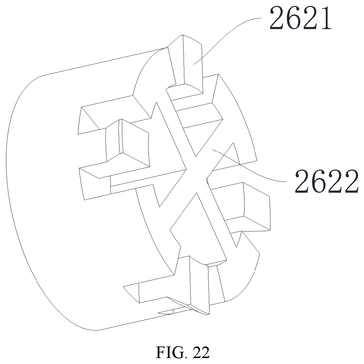

According to a second aspect, referring to FIG. 17 to FIG. 25, this disclosure discloses an electromagnetic pump, including an induction coil structure 1 and a pump assembly 2. The pump assembly 2 is disposed in a bobbin 123, and the pump assembly 2 is surrounded by a magnetic yoke ring 14. The magnetic induction coil structure 1 may provide a driving force for the pump assembly 2, and the pump assembly 2 is internally provided with a cavity 200, which has a function of self-priming pressurization. By applying pressure to a fluid in the cavity 200, the output fluid may generate large pressure, thereby meeting the requirement of outputting a high-pressure fluid. Since a coil in an existing electromagnetic pump is a pure solenoid coil, and more wires with insulation layers are used. During working and operation, the coil generates a magnetic field, and an external retaining frame 122 and the magnetic yoke ring 14 form a magnetic loop. In this way, the magnetic field use efficiency is low, and the temperature rise is high. If the temperature rise is to be reduced, the usage of the wire may be increased, which may increase the production cost. Alternatively, a static iron core 221 is added in a cylindrical pipe to improve the electromagnetic attraction force and the use efficiency. However, this approach also increases the production cost. In addition, during working, the static iron core 221 and a movable iron core 221 attract each other and collide, which easily destroys protection layers of the static iron core and the movable iron core, resulting in rust and contamination of media. The induction coil structure 1 may solve this problem very well. The wire with the insulation layer in the middle is reduced, and the wire with the insulation layer is concentrated at the two ends, so that the wire with the insulation layer is retained at two poles with strong magnetic fields, and the quantity of the wires with the insulation layers in weak magnetic fields is reduced, thereby achieving the purpose of reducing the cost. In addition, the quantity of the wires with the insulation layers is reduced, so that the temperature rise may be reduced.

The pump assembly 2 includes a pipe body 21, a moving assembly 22, a reset assembly 23, a sealing assembly 24, a valve core 25, and a water outlet pipe 26. The pipe body 21 is disposed on the frame body 12. The moving assembly 22, the reset assembly 23, and the valve core 25 are movably disposed in the pipe body 21. The reset assembly 23 is in contact with the moving assembly 22. The moving assembly 22 is detachably connected to the valve core 25. The water outlet pipe 26 is disposed on one side of the pipe body 21. The sealing assembly 24 is disposed between the pipe body 21 and the water outlet pipe 26. The sealing assembly 24 includes a sealing rubber head 241, and the sealing rubber head 241 is disposed at a tail end of the valve core 25. The moving assembly 22, the sealing assembly 24, the valve core 25, and the water outlet pipe 26 form a sealed cavity 200 in the pipe body 21. The induction coil structure is powered on, the moving assembly is driven by a magnetic force of the induction coil structure and squeezes the reset assembly in the pipe body, and pressure intensity in the cavity is reduced, to open the valve core. The induction coil structure is powered off, the reset assembly is reset, and the pressure intensity in the cavity is increased, to push open the sealing rubber head and reciprocate to pump water. When a winding coil 11 is powered on, the moving assembly 22 is subjected to magnetic forces of the magnetic yoke ring 14 and a magnetization member 13 and squeezes the reset assembly 23 in the pipe body 21. At this time, the pressure intensity in the cavity 200 is reduced, to open the valve core 25. When an alternating current reaches a second half of a cycle, the reset assembly 23 is reset. At this time, the pressure intensity in the cavity 200 is increased, to push open the sealing rubber head 241 and reciprocate to pump water. During this period, the magnetization member 13 enhances the magnetic force of the magnetic yoke ring 14.

It may be understood that during working, the winding coil 11 is powered on. At this time, the magnetic yoke ring 14 and the magnetization member 13 generate magnetic fields together, and the magnetic fields are conducted to the moving assembly 22. At this time, the magnetization member 13 enhances a magnetic force generated by magnetic flux in the winding coil 11. The moving assembly 22 moves leftward under the action of the magnetic yoke ring 14. At the same time, the volume of the sealed cavity 200 formed by the moving assembly 22, the sealing assembly 24, the valve core 25, and the water outlet pipe 26 in the pipe body 21 is increased, and the pressure intensity is reduced. At this time, the valve core 25 is opened passively, to balance the pressure intensity in the cavity 200. The used current is the alternating current, and after the current passes through a disposed diode, half the cycle of current remains. Therefore, during powering on to powering off of the electromagnetic pump, the reset assembly 23 is reset after being compressed and deformed and pushes out the moving assembly 22, to enable the moving assembly 22 to move rightward. At the same time, the volume of the cavity 200 is reduced, and the pressure intensity is increased, so that the sealing rubber head 241 is pushed open, to balance the pressure intensity and reciprocate to pump water.

The induction coil structure 1 and the pump assembly 2 are detachably connected or fixedly connected, the retaining frame 122 is sleeved on an outer side of the bobbin 123, and the winding coil 11 is sleeved on the bobbin 123. The retaining frame 122 and the bobbin 123 are provided with through holes respectively. The pipe body 21 in the pump assembly 2 penetrates through the through holes of the retaining frame 122 and the bobbin 123. When parts need to be replaced, the pump assembly 2 is taken out for replacement. In a specific embodiment, a coupling 124 is disposed on one side of the frame body 12, and the coupling 124 and the retaining frame 122 are provided with threaded holes respectively. After the through holes of the retaining frame 122 and the bobbin 123 are aligned, the pipe body 21 is inserted, then the coupling 124 is inserted into the pipe body 21, and then screws are sequentially screwed into the threaded holes of the coupling 124 and the retaining frame 122. In another specific embodiment, the coupling 124 and the retaining frame 122 are respectively provided with two threaded holes that are disposed diagonally. The pump assembly 2 and the induction coil structure 1 can be assembled and fixed through the two threaded holes only. In another specific embodiment, the induction coil structure 1 and the pump assembly 2 are detachably connected, that is, the pump assembly 2 is inserted into the through holes of the retaining frame 122 and the bobbin 123. When parts need to be replaced, the pump assembly 2 is taken out for replacement.

When the induction coil structure 1 is powered on, the moving assembly 22 is subjected to the enhanced magnetic force and reciprocates in the pipe body 21, thereby playing a role of pumping water. The disposed magnetization member 13 can not only increase an electromagnetic attraction force, but also reduce the usage of the wire with the insulation layer to a great extent, so that the cost is reduced, the power is smaller, and the efficiency is higher.

Specifically, the position of the magnetization member 13 can be set according to the use requirements of the electromagnetic pump. When an electromagnetic pump with large pressure and flow is needed, the magnetization member 14 may be disposed close to the magnetic yoke ring 14 at the corresponding position, thereby enhancing the magnetic field intensity surrounding the magnetic yoke ring 14, to generate a stronger electromagnetic force and obtain larger pressure and large formation. After the water in the electromagnetic pump 1 is pumped dry, the moving assembly 22 stops moving due to the large resistance. In addition, the magnetization member 13 is placed in the middle position between two adjacent magnetic yoke rings 14, so that electromagnetic forces generated by the adjacent magnetic yoke rings 14 may be more uniform.

As an embodiment, the coupling 124 is disposed on one side of the frame body 12, and the coupling 124 may be connected to the pipe body 21 through which a fluid flows and fix the pipe body. The coupling 124 and the retaining frame 122 are provided with the threaded holes respectively. After the through holes of the retaining frame 122 and the bobbin 123 are aligned, the pipe body 21 is inserted, then the coupling 124 is inserted into the pipe body 21, and then screws are sequentially screwed into the threaded holes of the coupling 124 and the retaining frame 122. The pipe body 21 is limited through the coupling 124 and the retaining frame 122, thereby enabling the fluid to enter the pipe body 21 from the coupling 124. Furthermore, the coupling 124 and the retaining frame 122 are respectively provided with the two threaded holes that are disposed diagonally. The pipe body 21 and the retaining frame 122 can be assembled and fixed through the two threaded holes only.

The reset assembly 23 includes a first elastic member 231, a second elastic member 232, and a third elastic member 233. The moving assembly 22 includes an iron core 221. The first elastic member 231, the second elastic member 232, and the iron core 221 are movably disposed in the pipe body 21 respectively. The iron core 221 is disposed between the first elastic member 231 and the second elastic member 232. The third elastic member 233 is movably disposed in the iron core 221 and is detachably connected to the valve core 25.

During a specific implementation: the first elastic member 231 and the second elastic member 232 are springs, and the third elastic member 233 is a tension spring. The moving assembly 22 includes the iron core 221, and the iron core 221 is made of iron and can move in the pipe body 21 after being subjected to the magnetic attraction action. Specifically, after the winding coil 11 is powered on, the iron core 221 moves leftward under the action of the magnetic forces of the magnetic yoke ring 14 and the magnetization member 13. At the same time, the volume of the sealed cavity 200 formed by the moving assembly 22, the sealing assembly 24, the valve core 25, and the water outlet pipe 26 in the pipe body 21 is increased, and the pressure intensity is reduced. At this time, the valve core 25 is opened passively, to balance the pressure intensity in the cavity 200. During the next cycle of the current, the first elastic member 231 is reset, to enable the iron core 221 to move rightward. At the same time, the volume of the cavity 200 is reduced, and the pressure intensity is increased, so that the sealing rubber head 241 is pushed open, to pump the liquid out. The first elastic member 231 and the second elastic member 232 are disposed in the pipe body 21 and disposed on two sides of the iron core 221. The second elastic member 232 can form a buffer to the iron core 221. After the winding coil 11 is powered on, the magnetic yoke ring 14 generates the magnetic force, and under the action of the magnetic force, the iron core moves in the pipe body 21. When the iron core 221 moves leftward, pressure is applied to the first elastic member 231, and the first elastic member 231 is compressed after being stressed and generates deformation. Then, the first elastic member 231 is reset, and the iron core 221 moves rightward, to squeeze the second elastic member 232. At this time, the second elastic member 232 forms the buffer to the iron core 221, thereby avoiding large wear on the pipe body 21.

In addition, there is no fluid in the electromagnetic pump, so that there may be a situation that the iron core cannot move due to the large resistance of the iron core after the fluid dries up. By disposing the magnetization member in the induction coil structure, the magnetic field intensity may be enhanced, thereby making the electromagnetic force stronger, so that the initial electromagnetic force is enhanced, and the iron core is easier to overcome the resistance.

One side of the iron core 221 is provided with a conical hole 2211, and the valve core 25 is provided with a limiting block 251 corresponding to the conical hole 2211. The limiting block 251 is disposed in the conical hole 2211 and is in contact with or away from the conical hole 2211.

During a specific implementation: the iron core 221 is provided with the conical hole 2211 that is conical, the valve core 25 is provided with the limiting block 251 corresponding to the conical hole 2211, the limiting block 251 is conical, and the limiting block 251 is disposed in the conical hole 2211. During working, the iron core 221 drives the valve core 25 to move, so that the valve core 25 is in contact with or away from the conical hole 2211. The conical hole 2211 and the limiting block 251 are conical and can limit the valve core 25. When the iron core 221 drives the third elastic member 233 to move leftward, the limiting block 251 of the valve core 25 is in contact with the conical hole 2211, and at this time, the conical hole 2211 is attached to the limiting block 251, to limit the valve core 25. The valve core 25 is limited in an accommodating space between a front end of the iron core 221 and the water outlet pipe 26.

The third elastic member 233 is provided with a hook, and the valve core 25 is provided with a circular hole 252. The hook penetrates through the circular hole 252 and drives the valve core 25 to move in the water outlet pipe 26.

During a specific implementation: the third elastic member 233 is the tension spring, and the hook disposed on the tension spring and the circular hole 252 disposed on the valve core 25 are matched for mounting, that is, the disposed hook passes through the circular hole, so that the valve core 25 can move under the driving of the third elastic member 233, to open and close the valve core 25. Detachment and replacement can be facilitated in a manner of assembling the hook and the circular hole 252.

The sealing assembly 24 includes a gasket 242, a movable sealing ring 2421, and a static sealing ring 2422. One side of the pipe body 21 is provided with a stepped hole 211, and the gasket 242 is disposed in the stepped hole 211 and is attached to an inner wall of the stepped hole 211. The movable sealing ring 2421 is disposed in an accommodating space formed by the gasket 242, the iron core 221, and the water outlet pipe 26. The static sealing ring 2422 is sleeved in an accommodating space formed by the water outlet pipe 26, the pipe body 21, and the gasket 242.

During a specific implementation: the pipe body 21 is provided with the stepped hole 211, and the gasket 242 is disposed in the stepped hole 211 and is attached to the inner wall of the stepped hole 211. The other end of the gasket 242 is attached to the water outlet pipe 26, to be used for preventing the water outlet pipe 26 from moving in an axial direction. The movable sealing ring 2421 is sleeved on an outer side of the iron core 221 and is located in the accommodating space formed by the gasket 242, the iron core 221, and the water outlet pipe 26 jointly. The static sealing ring 2422 is sleeved on an outer side of the water outlet pipe 26 and is located in the accommodating space formed by the water outlet pipe 26, the pipe body 21, and the gasket 242.

A base body 262 and a conical fourth elastic member 261 are disposed in the water outlet pipe 26. The fourth elastic member 261 is movably disposed between the sealing rubber head 241 and the base body 262. The base body 262 is provided with protruding blocks 2621, and the protruding blocks 2621 are distributed annularly and face the fourth elastic member 261. The base body 262 is provided with abutting blocks 2622, and the abutting blocks 2622 are disposed at the center of the base body 262 in an intersected manner. One end of the fourth elastic member 261 is in contact with the sealing rubber head 241, and the other end is in contact with the abutting blocks 2622 and is located between the protruding blocks 2621.

During a specific implementation: the fourth elastic member 261 and the base body 262 are disposed in the water outlet pipe 26 respectively, and the fourth elastic member 261 is a conical spring. A front end of the fourth elastic member 261 is in contact with the sealing rubber head 241, and the other end is in contact with the base body 262. The fourth elastic member 261 is conical, which can have good damping and buffering capabilities and can deform when bearing the pressure, to absorb the energy, thereby playing a role of protecting the sealing rubber head 241. The base body 262 is provided with the protruding blocks 2621, the protruding blocks 2621 are distributed annularly and face the base body 262, which is further provided with the fourth elastic member 261, to be used for limiting the fourth elastic member 261, thereby preventing the fourth elastic member 261 from separating from the base body 262. The base body 262 is provided with the abutting blocks 2622, and the abutting blocks 2622 are disposed at the center of the base body 262 in an intersected manner and used for abutting against the fourth elastic member 261. The abutting blocks 2622 are disposed at the center of the base body 262 in an intersected manner, hollowed-out portions are further disposed, and the hollowed-out portions are used for allowing the liquid to flow.

Specifically, when the sealing rubber head 241 moves in a horizontal direction, the fourth elastic member 261 is deformed or reset. When the iron core 221 moves rightward, the sealing rubber head 241 is pushed open, moves rightward, and squeezes the fourth elastic member 261, so that the fourth elastic member 261 is compressed and deformed. Then, the fourth elastic member 261 is reset.

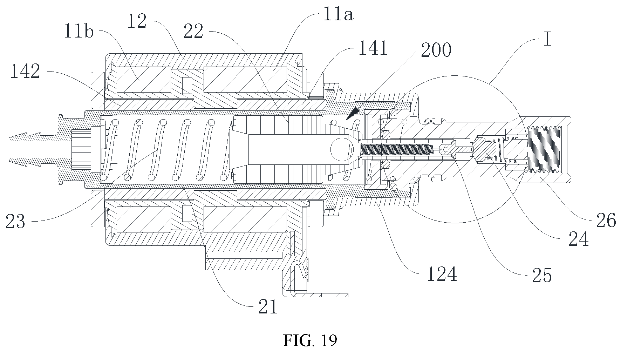

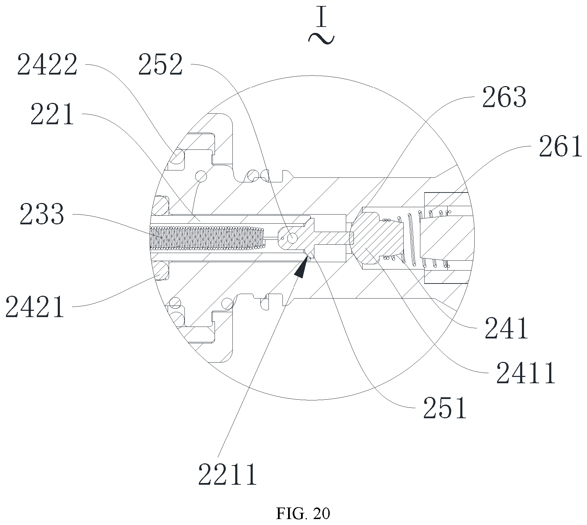

Referring to FIG. 19 and FIG. 20, an arc-shaped block 2411 is disposed at a front end of the sealing rubber head 241, a groove 263 corresponding to the front end is formed in the water outlet pipe 26, and the arc-shaped block 2411 is attached to or away from an inner wall of the groove 263. The valve core 25 penetrates through the groove 263 and is in contact with or away from the sealing rubber head 241.

During a specific implementation: the arc-shaped block 2411 is disposed at the front end of the sealing rubber head 241, the groove 263 corresponding to the front end is disposed in the water outlet pipe 26, and the front end is attached to the inner wall of the groove 263. The arc-shaped block 2411 and the groove 263 are arc-shaped, which can be better attached and increase the contact area, to improve the sealing property of the cavity 200. When the iron core 221 moves rightward, the pressure intensity in the cavity 200 is increased. At this time, the sealing rubber head 241 is pushed open, that is, the front end of the sealing rubber head 241 is away from the groove 263 and squeezes the fourth elastic member 261. Then, the fourth elastic member 261 is reset, so that the front end of the sealing rubber head 241 is attached to the groove 263 and forms the sealed cavity 200 again with the iron core 221, the movable sealing ring 2421, the valve core 25, and the water outlet pipe 26.

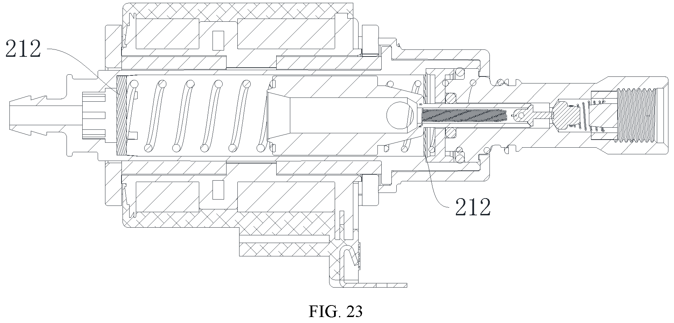

Referring to FIG. 23, the iron core 221 and/or an inner wall of the pipe body 21 is provided with a coating. At least one buffer piece 212 is disposed in the pipe body 21, and the buffer piece 212 is attached to the inner wall of the pipe body 21. The iron core 221 is in contact with or away from the buffer piece 212.

During a specific implementation: in a specific embodiment, the outer side of the iron core 221 is plated with a nano-coating, which can avoid rust and contamination of media, reduce movement wear, and improve the service life. In another specific embodiment, the inner wall of the pipe body 21 is provided with a buffer layer that is disposed by coating or serving as a cylinder to be directly sleeved therein, which can buffer the movement of the iron core 221 in the pipe body 21. In another specific embodiment, the outer side of the iron core 221 and the inner wall of the pipe body 21 are provided with the coatings, which can improve the service life of the iron core 221 and the pipe body 21. The buffer piece 212 is attached to the inner wall of the pipe body 21. In a specific embodiment, the buffer piece 212 is of a sheet shape and is made of silicone. When moving in the pipe body 21, the iron core 221 easily collides with the two ends of the pipe body 21 and easily generates large noise during collision. In another specific embodiment, two buffer pieces 212 are disposed and are disposed at the two ends of the pipe body 21 respectively. After moving in the pipe body 21, the iron core 221 is in contact with the buffer piece 212 and squeezes the buffer piece 212. At this time, the buffer piece 212 absorbs the kinetic energy, to play a buffer role, which can reduce the noise generated during the operation of the electromagnetic pump and improve the service life.

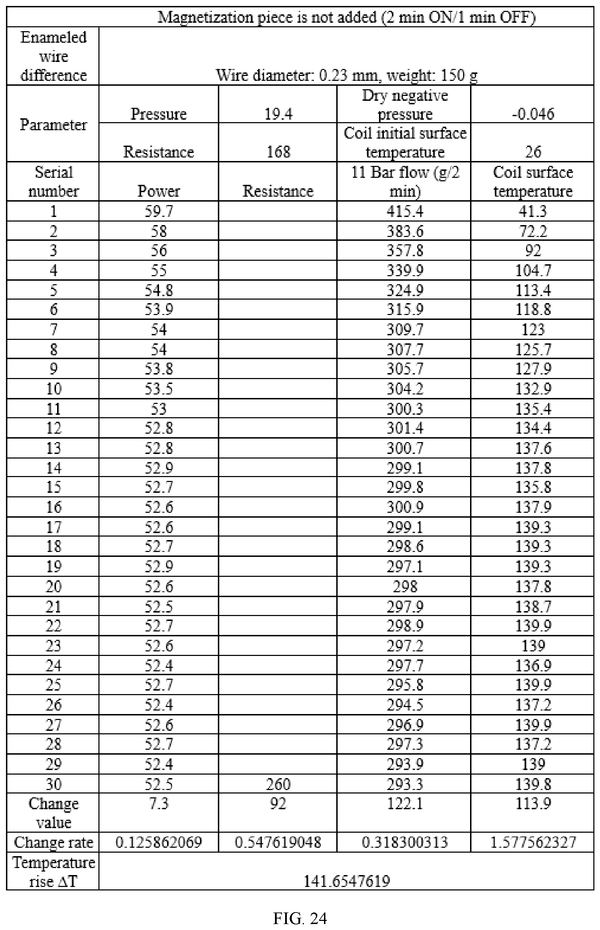

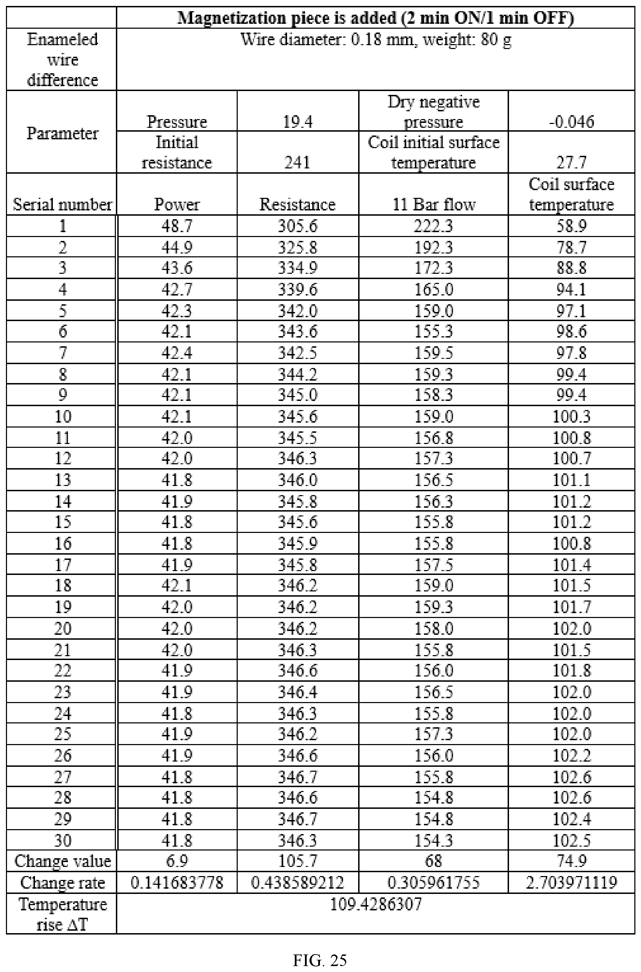

Referring to FIG. 24 and FIG. 25, FIG. 24 shows the coil that is not provided with the magnetization member, with a coil wire diameter of 0.23 mm and a weight of 150 g. It can be known from FIG. 24 that the temperature rise of the coil at this time is 141.64547619. FIG. 24 shows the coil that is provided with the magnetization member, with a coil wire diameter of 0.18 mm and a weight of 80 g. It can be known from FIG. 25 that the temperature rise of the coil at this time is 84.59421488. In conclusion, after the magnetization member 13 is added to the winding coil 11, the temperature rise of the winding coil 11 is much less than the temperature rise obtained when the magnetization member 13 is not added, and the flow change rate is small and more stable. Therefore, the magnetization member 13 has strong thermal conductivity, which can conduct the internal heat of the winding coil 11 to the outside, thereby reducing the temperature rise. At the same time, the weight of the used wire with the insulation layer is small, which can reduce the cost to a great extent.

As an embodiment, for the control of the electromagnetic pump 100, specific operations are as follows:
The winding coil 11 in the magnetic induction coil mechanism is powered on, and a current value is configured according to an electromagnetic force that the iron core 221 at the corresponding position of the winding coil 11 actually needs to apply. After the winding coil 11 is powered on according to a preset first current direction during a preset first time period, the current direction is changed, and the winding coil 11 is powered on according to a second current direction during a preset second time period. The winding coil 11 is powered on alternately according to the first current direction and the second current direction, to control the movement direction of the iron core 221.

Specifically, after the magnetic induction coil mechanism is mounted on the pump assembly 2, before the electromagnetic pump 100 is operated, it is necessary to determine the magnitude of the electromagnetic force required by the iron core 221 at different positions on the magnetic induction coil mechanism. The corresponding input current value of the winding coil 11 is calculated according to parameters such as the electromagnetic force and the quantity of windings of the winding coil 11. The magnitude of the electromagnetic force is accurately controlled according to actual requirements, to adapt to different working condition requirements, thereby implementing the adjustability of the output flow and pressure of the pump. By utilizing the change in the current direction to change the polarity of the generated magnetic field, the electromagnetic force can change with the current direction. The electromagnetic force may drive the iron core 221 to reciprocate in the pipe body 21. The electromagnetic force drives the iron core 221, which may improve the response speed and may implement high-frequency operations. The winding coil 11 alternately changes the current direction, to control the movement direction of the iron core 221, so that the iron core 221 may reciprocate, thereby pumping high-pressure liquid out. This continuous alternating process may implement the continuous transportation of the liquid.

It may be understood that the electromagnetic force may be provided for the iron core 221 by powering on the induction coil structure 1, thereby driving the iron core 221 to move. Since the iron core 221 needs to be driven by different electromagnetic forces at different positions of the pipe, the magnitudes of the current values that need to be applied to the winding coil 11 on the induction coil structure 1 are different, which need to be configured corresponding to different positions of the pipe. The electromagnetic pump 100 needs to be opened or closed, so that the iron core 221 needs to move toward two different directions. By changing the current direction applied to the induction coil structure 1, the movement direction of the iron core 221 is controlled, so that the electromagnetic pump 100 is opened or closed. The conduction efficiency of the electromagnetic pump 100 is improved by utilizing the coil to perform magnetization, and the current direction is changed alternately, so that the electromagnetic force continuously alternates in direction. The iron core 221 in the pump assembly 2 continuously reciprocates, so that liquid absorption and liquid discharge of the cavity 200 in the pump assembly 2 are implemented. The pump assembly 2 may continuously output the fluid, and the pump assembly 2 may be efficiently and reliably operated. The movement of the iron core 221 is controlled through the electromagnetic force generated by the winding coil 11, so that the iron core 221 is prevented from being directly driven to move, and the energy consumption required by the pump assembly 2 may be reduced.

Further, the current values input into the winding coils 11 at different positions are different, so that the generated electromagnetic forces may be different, and situations that different positions need different electromagnetic forces may be adapted, thereby enabling the movement speed and position of the iron core 221 to be controllable. For example, near a water outlet and a water outlet, the speed of the iron core 221 may be gradually slowed down, thereby preventing the excessively rapid movement speed of the iron core 221 from causing the water hammer effect.

As an embodiment, the winding coil 11 is connected to an alternating current or a direct current. When the alternating current is connected, a diode may be connected to control a current input direction. When the direct current is connected, the direct current may be input according to a winding direction of the winding coil 11, so that the iron core 221 in the pump assembly 2 may reciprocate.

As an embodiment, current values introduced into the winding coils 11 close to the two ends of the pipe are less than current values introduced into the winding coils 11 in the middle of the pipe. Specifically, the current values input at the two ends are less than the current values in the middle, so that the electromagnetic force on the iron core 221 close to the two ends of the pipe may be reduced, and the speed when moving to the two ends is reduced, thereby avoiding rapidly approaching two ports of the pipe and preventing the occurrence of water hammer effect. At the same time, the current values in the middle are large, so that the iron core 221 may overcome the action forces generated by springs at the two ends, and mechanisms such as the iron core 221 and the valve core 25 may move normally.

As an embodiment, during starting, a power supply of a preset first current value is applied to the winding coils 11 in the middle of the pipe. After a third preset time period after starting, a power supply of a preset second current value is applied to the winding coils 11 in the middle of the pipe, and the first current value is greater than the second current value.

Specifically, during starting, a large current value is applied to the iron core 221. After starting for a period of time, the current value of the power supply applied to the iron core 221 is reduced to the second current value, which may meet some situations that a large driving force needs to be provided in an initial state at a specific position. For example, when the pump assembly 2 is started, the inside of the cavity 200 is in a dry state, and the iron core 221 needs to overcome large resistance in the cavity 200, resulting in a larger driving force than the driving force required under normal situations. Therefore, during starting, larger currents need to be provided for the winding coils 11 in the middle, to provide a larger driving force for the iron core 221, thereby starting the iron core 221.

As an embodiment, according to the power supply connected to the winding coils 11, a current switching cycle is controlled through a timer or a PWM signal, to control the output flow and pressure stability of the pump.

As an embodiment, a plurality of the winding coils 11 are disposed and are disposed in a segmented manner. The winding proportion of the winding coils 11 may be customized, so that each segment of winding generates different electromagnetic forces, thereby implementing diverse movements.

According to a third aspect, this disclosure provides an electromagnetic valve, including the above induction coil structure 1 and a pipe. The electromagnetic valve is used for controlling the entry and exit of a fluid in the pipe. Since the existing valve has an excessively rapid opening speed or closing speed, the water hammer effect occurs easily, resulting in damage to the pipe at which the existing valve is located. To solve the damage caused by the water hammer effect, in the prior art, methods such as a proportional valve and PWM adjustment are usually used to adjust the valve. The induction coil structure 1 is disposed on the electromagnetic valve and is disposed on the pipe of the valve in a segmented manner, to control different electromagnetic forces generated by each segment of coil, so that an opening amplitude of a valve core 25 of the electromagnetic valve is adjusted, and the opening speed or closing speed of the electromagnetic valve gradually changes. For example, during opening, the opening speed of the electromagnetic valve is gradually increased, and during closure, the opening speed is gradually reduced, to avoid the water hammer effect generated by the fluid in the pipe, thereby preventing the pipe and device connected to the electromagnetic valve from being damaged by the force generated by the water hammer effect, and extending the service life of the device.

According to a fourth aspect, this disclosure provides an electromagnetic fluid pump, including the above induction coil structure 1 and a pipe. The induction coil structure 1 is disposed outside the pipe, and the induction coil structure 1 generates a magnetic field after being powered on.

Specifically, a fluid having the electrical conductivity passes through the pipe. After the induction coil structure 1 is powered on, the fluid in the pipe generates an electromagnetic force under the action of the magnetic field. The electromagnetic force may provide a driving force for the fluid in the pipe, so that the fluid flows along the direction of the electromagnetic force in the pipe. Structures similar to a driving assembly and a pump assembly in the electromagnetic pump may be omitted in the electromagnetic fluid pump, so that the structure of the electromagnetic fluid pump is lightweight, and the overall production cost of the electromagnetic fluid pump is reduced. In addition, the fluid having the electrical conductivity may corrode the pump assembly, and the pump body may prevent the fluid from corroding the pump assembly, thereby prolonging the service life of the electromagnetic fluid pump.

As an embodiment, a plurality of coils are used in the induction coil structure 1, which are disposed in a segmented manner and may play a role of magnetization. The plurality of segments of coils may enable liquid metal to respond, flow, and stop more rapidly, to meet the rapid response requirement of an apparatus, thereby ensuring the stability of the apparatus.

In the above embodiments, the descriptions for various embodiments have respective focuses. For a part that is not described in detail in an embodiment, reference may be made to related descriptions in other embodiments.

In the description of this disclosure, it should be understood that the orientations or positional relationships indicated by the terms "center", "longitudinal", "transverse", "length", "width", "thickness", "up", "down", "front", "back", "left", "right", "vertical", "horizontal", "top", "bottom", "inside", "outside", "clockwise", "counter-clockwise", and the like are in accordance with those shown in the accompanying drawings and intended only for the convenience of describing this disclosure and simplifying the description rather than for indicating or implying that the referred apparatus or element must be provided with a particular orientation or constructed and operated in a particular orientation; therefore, they should not be construed as limiting this disclosure.

Furthermore, the terms "first" and "second" are intended only for descriptive purposes and should not be construed as indicating or implying their relative importance or implicitly indicating the quantity of technical features indicated. Therefore, features defined by "first" and "second" may explicitly or implicitly include one or more of these features. In the description of this disclosure, the meaning of "plurality of" is two or more, unless otherwise specifically defined.

In this disclosure, unless otherwise expressly specified and defined, the terms "mounted", "attached", "connected", "fixed", etc. should be understood in a broad sense, for example, a connection may be a fixed connection, a detachable connection, or an integral connection; it may be a mechanical connection or an electrical connection; it may be a direct connection or an indirect connection via an intermediate medium; and it may be a connection between two elements or an interaction between two elements. For those of ordinary skill in the art, the specific meanings of the above terms in this disclosure can be understood on a case-by-case basis.

In this disclosure, unless otherwise expressly specified and defined, a first feature being "above" or "below" a second feature may include not only direct contact between the first and second features but also indirect contact between the first and second features via another feature between them. Furthermore, the first feature being "over", "above", or "on" the second feature includes the first feature being directly above and diagonally above the second feature, or merely means that the first feature is higher in level than the second feature. That the first feature is "beneath", "below", or "under" the second feature includes that the first feature is directly below and diagonally below the second feature, or merely means that the first feature is lower in level than the second feature.

In the description of the specification, descriptions of reference terms such as "an embodiment", "some embodiments", "example", "specific example", or "some examples" mean that a specific feature, structure, material, or characteristic described in conjunction with the embodiment or example is included in at least one embodiment or example of this disclosure. In this specification, the schematic expressions of the above terms should not be understood as necessarily referring to the same embodiments or examples. Moreover, the specific feature, structure, material, or characteristic described may be combined in any suitable manner in any one or more embodiments or examples. In addition, those skilled in the art may incorporate and combine different embodiments or examples described in this specification.

Apparently, various modifications and variations to this disclosure can be made by those skilled in this art without departing from the spirit and scope of this disclosure. In this way, if these modifications and variations of this disclosure fall within the scope of the claims of this disclosure and equivalents thereof, this disclosure is also intended to encompass all such modifications and variations within the scope of the claims of this disclosure and equivalents thereof.

The above descriptions are specific implementations of this disclosure, but the protection scope of this disclosure is not limited thereto. Various equivalent modifications or substitutions can be easily conceived by those skilled in the art within the technical scope of this disclosure, and these modifications or substitutions should be covered in the protection scope of this disclosure. Therefore, the protection scope of this disclosure shall be subject to the protection scope of the appended claims.

## Claims

1. An induction coil structure, comprising one winding coil and a bobbin, wherein the winding coil is disposed on an outer wall of the bobbin; and
the winding coil is formed by winding a wire with an insulation layer, and a quantity of windings of the wire with the insulation layer at two ends of the bobbin is greater than a quantity of windings of the wire with the insulation layer in the middle.

2. The induction coil structure according to claim 1, wherein one wire with the insulation layer is disposed in the middle of the winding coil.

3. An induction coil structure, comprising at least two winding coils and a bobbin, wherein the winding coils are disposed on an outer wall of the bobbin in a segmented manner; and
the winding coils are formed by winding wires with insulation layers, the winding coils are connected in parallel, and winding density of the winding coils at two ends of the bobbin is greater than winding density of the winding coils in the middle of the bobbin.

4. The induction coil structure according to claim 3, wherein the winding coils are disposed on the bobbin at equal or unequal intervals.

5. The induction coil structure according to claim 3, wherein directions of currents introduced into any two of the winding coils are the same or opposite.

6. The induction coil structure according to claim 3, wherein current values introduced into the winding coils disposed close to the two ends of the bobbin are less than current values introduced into the winding coils in the middle of the bobbin.

7. The induction coil structure according to claim 3, wherein a power supply is input into the induction coil structure initially, and a power supply of a preset first current value is applied to the winding coils in the middle of the bobbin; and
after the power supply of the first current value is applied for a third preset time period, a power supply of a preset second current value is applied to the winding coils in the middle of the bobbin, and the first current value is greater than the second current value.

8. The induction coil structure according to any one of claims 1 to 7, comprising at least one magnetic yoke ring and a retaining frame, wherein the bobbin is connected to the retaining frame, and the retaining frame is disposed on a periphery of the winding coil;
the winding coil, the magnetic yoke ring, and the retaining frame form a closed-loop magnetic field; and
at least one mounting position is disposed in the bobbin, the magnetic yoke ring is disposed on the mounting position, a quantity of the disposed mounting positions is matched with a quantity of the disposed magnetic yoke rings, and one magnetic yoke ring is disposed on one mounting position.

9. The induction coil structure according to claim 8, comprising at least one magnetization member, wherein the magnetization member is disposed in the middle of the winding coil or between two adjacent winding coils;
preferably, the magnetization member is disposed annularly, and the magnetization member is sleeved on the bobbin;
preferably, the bobbin is provided with at least one placement block, and the placement block is sleeved on an outer side of the bobbin;
preferably, the placement block is detachably connected to the bobbin;
preferably, the magnetization member is provided with a clamping position, the placement block is provided with an arc-shaped groove, and the magnetization member is mounted in the arc-shaped groove; and
preferably, the magnetization member is disposed in a split manner, the magnetization member comprises at least two magnetic members, and all the magnetic members form one annulus.

10. The induction coil structure according to claim 9, wherein the magnetization member is made of a magnetically conductive material or a non-magnetically inductive material;
preferably, an air gap is formed between the magnetization member and the retaining frame;
preferably, an edge of the magnetization member is in contact with an inner wall of the retaining frame; and
preferably, an encapsulation layer is comprised, and the encapsulation layer is covered on an outer surface of the winding coil.

11. The induction coil structure according to claim 9, comprising a first contact piece and a second contact piece, wherein the first contact piece and the second contact piece are mounted on the retaining frame; and
any one winding coil comprises two wiring terminals, and the first contact piece and the second contact piece are connected to one wiring terminal respectively.

12. The induction coil structure according to claim 11, comprising a diode, wherein one end of the diode is connected to any one winding coil, and the other end of the diode is connected to the first contact piece or the second contact piece.

13. The induction coil structure according to claim 8, wherein the winding coil is connected to an alternating current or a direct current.

14. The induction coil structure according to claim 9, wherein the bobbin is made of an insulation material.

15. An electromagnetic pump, comprising the induction coil mechanism according to any one of claims 1 to 14.

16. The electromagnetic pump according to claim 15, comprising a pump assembly, wherein the pump assembly is disposed in a bobbin;
the pump assembly comprises a pipe body, a moving assembly, a reset assembly, a sealing assembly, a valve core, and a water outlet pipe;
the moving assembly, the reset assembly, and the valve core are movably disposed in the pipe body, the reset assembly is in contact with the moving assembly, and the moving assembly is detachably connected to the valve core;
the water outlet pipe is disposed on one side of the pipe body; and the sealing assembly is disposed between the pipe body and the water outlet pipe;
the sealing assembly comprises a sealing rubber head, and the sealing rubber head is disposed at a tail end of the valve core; and
the moving assembly, the sealing assembly, the valve core, and the water outlet pipe form a cavity in the pipe body.

17. The electromagnetic pump according to claim 16, wherein the induction coil mechanism is powered on, the moving assembly is driven by a magnetic force of the induction coil mechanism and squeezes the reset assembly in the pipe body, and pressure intensity in the cavity is reduced, to open the valve core; and
the induction coil mechanism is powered off, the reset assembly is reset, and the pressure intensity in the cavity is increased, to push open the sealing rubber head and reciprocate to pump water.

18. An electromagnetic valve, comprising the induction coil structure according to any one of claims 1 to 14.

19. An electromagnetic fluid pump, comprising the induction coil structure according to any one of claims 1 to 14.
